# EUROPÄISCHE PATENTANMELDUNG

(11) **EP 4 570 964 A1**
(43) Veröffentlichungstag der Anmeldung: **18.06.2025**
(21) Anmeldenummer: 23216113.3
(22) Anmeldetag: 13.12.2023
(51) Int. Cl.: C25B 15/08, H01M 8/04

(54) **SPÜLVORRICHTUNG ZUM ZWISCHENSPEICHERN EINES GASFÖRMIGEN MEDIUMS AUS EINEM SPÜLVORGANG**

(71) Anmelder: HPS Home Power Solutions AG, 12489 Berlin (DE)
(72) Erfinder: SCHMITT, Matthias, 12489 Berlin (DE); PLANERT, Thimo, 10829 Berlin (DE); LEVERENZ, Hendrik, 12053 Berlin (DE)
(74) Vertreter: Müller, Thomas

(57) **Zusammenfassung**

Die vorliegende Erfindung betrifft eine Spülvorrichtung (41) zum Aufnehmen und/oder Zwischenspeichern und/oder kontrollierten Abgeben von einem gasförmigen Medium, insbesondere von während eines Purgevorgangs ausgetragenem Purgegas, ein Spülsystem (40) und ein Energiesystem mit einer Spüleinrichtung (41) sowie ein Spülverfahren. Um die Spülvorrichtung (41) durch konstruktiv einfache und kostengünstige Maßnahmen weiter vorteilhaft zu modifizieren und zu optimieren, weist diese folgende Merkmale auf: eine volumenkonstante Speicherkammer (42) für das gasförmige Medium, die eine Eingangsseite (43) und eine Ausgangsseite (44) aufweist, eine erste Schnittstelle (45) zu wenigstens einer zu spülenden Komponente, insbesondere zu einer Elektrolyseeinrichtung (14) und/oder zu einer Brennstoffzelleneinrichtung (15), die vor der Eingangsseite (43) der Speicherkammer (42) bereitgestellt ist, eine zweite Schnittstelle (46) zu einer Pumpeneinrichtung (68), die vor der Eingangsseite (43) der Speicherkammer (42) bereitgestellt ist, und eine Pumpeneinrichtung (68), insbesondere eine Luftpumpeneinrichtung, die derart bereitgestellt ist, dass sie in der Lage ist, ein Prozessgas, insbesondere Luft, in die Speicherkammer (42) bereitzustellen.

## Beschreibung

Die vorliegende Erfindung betrifft zunächst eine Spülvorrichtung zum Aufnehmen und/oder Zwischenspeichern und/oder kontrollierten Abgeben von einem gasförmigen Medium, insbesondere von während eines Purgevorgangs ausgetragenem Purgegas. Weiterhin betrifft die Erfindung ein Spülsystem und ein Energiesystem mit einer solchen Spülvorrichtung, sowie ein Verfahren zum Aufnehmen und/oder Zwischenspeichern und/oder kontrollierten Abgeben von einem gasförmigen Medium, insbesondere von während eines Purgevorgangs ausgetragenem Purgegas.

Energiesysteme der gattungsgemäßen Art sind im Stand der Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme wird elektrische Energie zur Speicherung in chemische Energie umgewandelt. Als Energieträger bietet sich beispielsweise Wasserstoff an. Der Wasserstoff wird beispielsweise in einer Elektrolyseeinrichtung erzeugt und in einer Speichereinrichtung gespeichert. Hierbei handelt es sich beispielsweise um eine erste Betriebsweise des Energiesystems. Während des Betriebs des Energiesystems wird der Wasserstoff aus der Speichereinrichtung ausgespeichert und in einer Brennstoffzelleneinrichtung verbraucht. Hierbei handelt es sich beispielsweise um eine zweite Betriebsweise des Energiesystems. Üblicherweise sind die vorbeschriebenen Komponenten des Energiesystems räumlich voneinander getrennt und über eine Verbindungsleitungseinrichtung miteinander verbunden.

Im Rahmen des Betriebs eines solchen Energiesystems ist es erforderlich, die Brennstoffzelleneinrichtung, insbesondere auf deren Anodenseite und/oder die Elektrolyseeinrichtung, insbesondere auf deren Kathodenseite, regelmäßig zu spülen. Ein Spülen, das im Folgenden synonym auch als "Purgen" bezeichnet wird, ist insbesondere erforderlich, um unerwünschte Fremdgasanteile, sowie sich lokal in den Zellstrukturen ansammelndes flüssiges Wasser, die die Leistungsfähigkeit und die Lebensdauer der Brennstoffzelleneinrichtung und/oder der Elektrolyseeinrichtung negativ beeinflussen können, in regelmäßigen Abständen oder abhängig von den Betriebszuständen abzuführen. Das Spülen erfolgt unter Zuhilfenahme einer geeigneten Spülvorrichtung.

Eine bekannte Spülvorrichtung, von der die vorliegende Erfindung ausgeht, ist in der EP 3 380 652 B1 der Anmelderin offenbart und beschrieben. Bei dieser bekannten Lösung wird während des Spülvorgangs ein mit Wasserstoff beladener Spülgasvolumenstrom erzeugt und in einer Speicherkammer zunächst gespeichert. Die Speicherkammer dient dabei als Pufferspeicher beziehungsweise als Zwischenspeicher. Aus der Speicherkammer wird der mit Wasserstoff beladene Spülgasvolumenstrom anschießend als Ablassvolumenstrom über eine Ausströmeinrichtung an die Umgebung abgegeben. Bei der Speicherkammer handelt es sich um eine expandierbare Speicherkammer, welche als Kolbenspeicher oder als Faltenbalg ausgebildet ist. Das bedeutet, dass die Speicherkammer volumenveränderlich ausgebildet ist.

Der während des Spülvorgangs ausgetragene Spülgasvolumenstrom darf nicht unkontrolliert nach außen abgegeben werden, insbesondere nicht mit den beim Purgevorgang üblichen impulsartig hohen Mengenströmen, da sich ansonsten eine explosionsfähige Zone bilden kann. Deshalb ist es erforderlich, dass das in der Speicherkammer zwischengespeicherte Gas, bei dem es sich um Spülgas beziehungsweise "Purgegas" handelt, kontrolliert und insbesondere bezüglich des Mengenstromes vergleichmäßigt nach außen abgegeben wird.

Der vorliegenden Erfindung liegt die Aufgabe zugrunde, für die Zwecke einer kontrollierten Abgabe von einem gasförmigen Medium, das bei einem Spülvorgang ausgetragen wird, eine Spülvorrichtung, die insbesondere für ein Energiesystem bereitgestellt ist, durch konstruktiv einfache und kostengünstige Maßnahmen weiter vorteilhaft zu modifizieren und zu optimieren.

Diese Aufgabe wird erfindungsgemäß gelöst durch die Spülvorrichtung mit den Merkmalen gemäß dem unabhängigen Patentanspruch 1, welche den ersten Aspekt der Erfindung darstellt, durch das Spülsystem mit den Merkmalen gemäß dem unabhängigen Patentanspruch 9, welches den zweiten Aspekt der Erfindung darstellt, durch das Energiesystem mit den Merkmalen gemäß dem unabhängigen Patentanspruch 12, welches den dritten Aspekt der Erfindung darstellt, und durch das Verfahren mit den Merkmalen gemäß dem unabhängigen Patentanspruch 13, welches den vierten Aspekt der Erfindung darstellt.

Weitere Merkmale und Details der Erfindung ergeben sich aus den Unteransprüchen, aus der Beschreibung sowie aus den Zeichnungen. Dabei gelten Merkmale und Details, die im Zusammenhang mit dem ersten Erfindungsaspekt offenbart sind, vollumfänglich auch im Zusammenhang mit dem zweiten, dritten und vierten Erfindungsaspekt, und entsprechend umgekehrt, so dass hinsichtlich der Offenbarung eines der Erfindungsaspekte stets vollinhaltlich auch Bezug auf die jeweils anderen Erfindungsaspekte genommen und auf diese verwiesen wird. Insbesondere wird der Ablauf des erfindungsgemäßen Verfahrens auch im Zusammenhang mit der Beschreibung der verschiedenen Vorrichtungsaspekte erläutert, so dass hinsichtlich der Offenbarung des Verfahrens auch auf die Offenbarung der verschiedenen Vorrichtungsaspekte verwiesen wird.

Die Erfindung ist zunächst gerichtet auf eine Spülvorrichtung. Die Spülvorrichtung ist bevorzugt Bestandteil eines Spülsystems und/oder eines Energiesystems. Bei dem Spülsystem und dem Energiesystem handelt es sich insbesondere um ein aus mehreren Komponenten bestehendes Ganzes, wobei die Komponenten miteinander zu einer zweckgebundenen Einheit verbunden sind. Bei dem Energiesystem handelt es sich beispielsweise um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt. Im Folgenden werden diesbezüglich verschiedene bevorzugte Ausführungsbeispiele beschrieben.

In einer bevorzugten Ausführungsform handelt es sich bei dem Energiesystem um ein Gebäudeenergiesystem. Gebäudeenergiesysteme sind grundsätzlich aus dem Stand der Technik bekannt und dienen der Versorgung von Gebäuden, beispielsweise von Niedrigenergiegebäuden, Passivgebäuden oder Nullenergiegebäuden, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Gebäudeenergiesystem schafft die Grundlage dafür, dass der Energiebedarf eines Gebäudes, sowohl hinsichtlich des Strom- als auch des Wärmebedarfs vollständig aus erneuerbaren Energiequellen gedeckt werden kann und somit vollständige CO₂-Freiheit im Betrieb besteht. Wenigstens aber kann der Strombedarf eines Gebäudes im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein derartiges Gebäudeenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Gebäudeenergiesystem der genannten Art die folgenden Grundmerkmale auf:
- einen DC-Einspeisepunkt, bevorzugt ausgebildet für eine Nenn-Spannung von 48 Volt oder für eine Nennspannung zwischen 200 und 1000 Volt und/oder einem AC-Einspeisepunkt, bevorzugt ausgebildet für eine Spannung von 230 Volt oder 110 Volt oder einer 3-phasigen Einspeisung bei pro Phase 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt oder mit dem AC-Einspeisepunkt wenigstens zeitweise verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt oder über einen vorzugsweise bidirektionalen Wechselrichter mit dem AC-Einspeisepunkt wenigstens zeitweise verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Gebäudeenergieanlage.

Der grundlegende Gedanke der vorliegenden Erfindung besteht in der Bereitstellung einer besonders ausgebildeten Spülvorrichtung für ein gasförmiges Medium. Bei dem gasförmigen Medium handelt es sich insbesondere um Wasserstoff beziehungsweise ein wasserstoffhaltiges Gas, und somit mithin um ein explosionsfähiges Gas, falls im Gasgemisch ggf. auch nur temporär ein Sauerstoffanteil von mehr als 4 Vol.-Prozent enthalten sind.

Dieses gasförmige Medium entsteht insbesondere während eines Spülvorgangs, der im Folgenden synonym auch als "Purgevorgang" bezeichnet wird. Der Betrieb der Brennstoffzelleneinrichtung und der Elektrolyseeinrichtung erfordert ein zyklisches Bereinigen der reaktiven Oberflächen von unter anderem Stickstoff und Wasser. Das Reinigen beziehungsweise Spülen wird im Folgenden synonym auch als "Purgen" bezeichnet. Die Reinigung erfolgt vorzugsweise durch einen Druckstoß. Ein Purgevorgang kann ebenfalls sinnvoll sein, wenn jeweils der Betriebsdruck der Brennstoffzelleneinrichtung oder der Elektrolyseeinrichtung schnell auf einen niedrigeren Druck zu entspannen ist, beispielsweise im Rahmen kontrollierter Abschaltvorgänge. Bei Betriebsdruck, dieser liegt bei Brennstoffzellen bei etwa 350 mbar und beim Elektrolyseur bei etwa 30 bar, wird beispielsweise ein jeweiliges Purgeventil gegen Atmosphäre kurz geöffnet. Die entstehende Druckdifferenz über das Purgeventil erzeugt einen Gasvolumenstrom, der reaktionshemmende Stoffe austrägt und der in die von der Brennstoffzelle und den Elektrolyseur, vorzugsweise dual, genutzte Spülvorrichtung befördert wird. Das aus der Brennstoffzelleneinrichtung oder der Elektrolyseeinrichtung ausgetragene feuchte Purgegas darf nicht unkontrolliert nach außen, beispielsweise in die Umgebung oder in einen Systemschrank, gegeben werden, da sich ansonsten eine explosionsfähige Zone bilden kann. Durch eine dauerhaft anliegende technische Lüftung, insbesondere von mindestens 50 m³/h, kann jedoch eine kontrollierte Abgabe mit Mischungskonzentrationen weit unterhalb der Zündgrenze eines Wasserstoff-Luft-Gemisches erfolgen. Dafür muss das Purgegas in der Spülvorrichtung, die insbesondere auch als Pufferspeicher beziehungsweise ein Zwischenvolumen fungiert, aufgefangen, zwischengespeichert und danach kontrolliert aus der Spülvorrichtung abgegeben werden.

Wird die Spülvorrichtung für ein solches Energiesystem verwendet, handelt es sich dabei insbesondere um eine kleintechnische Anlage.

Gemäß dem ersten Aspekt der Erfindung wird eine Spülvorrichtung zum Aufnehmen und/oder Zwischenspeichern und/oder kontrolliertem, bezüglich seines Mengenstromes vergleichmäßigtem Abgeben von einem gasförmigen Medium, insbesondere von während eines Purgevorgangs ausgetragenem Purgegas, bereitgestellt, welche die Merkmale des unabhängigen Patentanspruchs 1 aufweist.

Bei der Spülvorrichtung handelt es sich demgemäß um eine Vorrichtung zur schnellen und kontrollierten, bezüglich seines Mengenstromes vergleichmäßigter Abgabe eines gasförmigen Mediums, die insbesondere in einem Purgesystem beziehungsweise Spülsystem zum Einsatz kommt. Bei dem gasförmigen Medium handelt es sich, wie weiter oben beschrieben, insbesondere um Wasserstoff oder ein wasserstoffhaltiges Gas. Dieses Gas wird während eines Spülvorgangs aus der zu spülenden Komponente, beispielsweise einer Elektrolyseeinrichtung oder einer Brennstoffzelleneinrichtung, ausgetragen.

Zunächst weist die Spülvorrichtung eine Speicherkammer für das gasförmige Medium auf. Die Speicherkammer weist eine Eingangsseite und eine Ausgangsseite auf. Das gasförmige Medium, welches während eines Spülvorgangs aus einer zu spülenden Komponente, beispielsweise einer Elektrolyseeinrichtung oder einer Brennstoffzelleneinrichtung, ausgetragen wird, wird in die Speicherkammer an der Eingangsseite eingespeist, darin zwischengelagert und anschließend an der Ausgangsseite ausgetragen. Beispielsweise wird das gasförmige Medium in Form eines, insbesondere hohen, impulsartigen Purgevolumenstroms ausgetragen und in die Speicherkammer eingespeist.

Die Speicherkammer ist volumenkonstant. Das bedeutet insbesondere, dass die Speicherkammer ein geschlossener, fester Behälter ist, der ein definiertes, feststehendes Innenvolumen aufweist. Die Größe der Speicherkammer kann nicht verändert werden. Die Größe und Form der Speicherkammer ist somit gleichbleibend, das heißt nicht veränderlich. Insoweit unterscheidet sich die erfindungsgemäße Speicherkammer von der aus dem Stand der Technik oben beschriebenen Speicherkammer, die ihre Größe verändern kann. Erfindungsgemäß wird statt eines variablen Volumens nunmehr ein fester Behälter verwendet. In einer Ausführungsform befindet sich vor der Speicherkammer, das heißt vor der Eingangsseite der Speicherkammer, eine Ventileinrichtung, wie im weiteren Verlauf der Beschreibung näher erläutert wird.

Die Speicherkammer kann auf unterschiedliche Weise ausgebildet sein. Grundsätzlich handelt es sich bei der Speicherkammer um ein Behältervolumen, in welchem gasförmiges Medium gespeichert wird. Gemäß einer Ausführungsform handelt es sich bei der Speicherkammer um einen geschlossenen Behälter, mit einer Öffnung an der Eingangsseite und einer Öffnung an der Ausgangsseite. Ein Behälter ist grundsätzlich ein Körper mit einem darin befindlichen Hohlraum oder Aufnahmeraum, welcher von einer umgebenden Wand begrenzt ist. Der Behälter dient dem Zweck, einen Inhalt, hier das gasförmige Medium, aufzunehmen und zu speichern, und es von der Umgebung zu trennen. Gemäß einer Ausführungsform kann die Speicherkammer zylinderförmig oder quaderförmig ausgebildet sein. Gemäß einer Ausführungsform kann die Speicherkammer über ihre Längserstreckung einen gleichbleibenden Querschnitt oder einen sich zumindest bereichsweise ändernden Querschnitt, insbesondere einen Strömungsquerschnitt, aufweisen. Gemäß einer Ausführungsform kann die Speicherkammer als ein Rohr oder anders ausgebildetes Hohlprofilelement ausgestaltet sein. Gemäß einer Ausführungsform handelt es sich bei der Speicherkammer um einen Mäander. Ein Mäander zeichnet sich dadurch aus, dass er einen kurvenreichen, verschlungen Verlauf hat. Dadurch lässt sich auf einem kleinen Raum eine große Länge des Speicherbereichs realisieren. Gemäß einer Ausführungsform ist die Speicherkammer monolithisch, das heißt aus einem Stück bestehend, ausgebildet. Der Gasraum, in welchem das Spülgas gespeichert ist/wird, ist somit durch eine zusammenhängende, einteilige Geometrie von der Umgebung getrennt und gasdicht gespeichert. Gemäß einer Ausführungsform ist die Speicherkammer derart ausgebildet, dass das Volumen der Speicherkammer so gewählt ist, dass das Behältervolumen das Purgevolumen an gasförmigem Medium, welches während des Spülvorgangs in die Speicherkammer eintritt, übersteigt, damit kein gasförmiges Medium über die Ausgangsseite schwallartig die Speicherkammer verlässt. Die Erfindung ist nicht auf bestimmte Ausgestaltungsformen für die Speicherkammer beschränkt.

Gemäß einer Ausführungsform ist in der Speicherkammer wenigstens ein Einbauelement angeordnet oder ausgebildet. Dieses Einbauelement ist derart bereitgestellt, dass es in der Lage ist, die Strömung in der Speicherkammer zu beeinflussen. Dies wird nachfolgend anhand einiger Beispiele verdeutlicht.

Gemäß einer Ausführungsform ist das Einbauelement derart bereitgestellt, dass es in der Lage ist, zu verhindern, dass sich das gasförmige Medium im Innern der Speicherkammer sofort vermischt. Insbesondere soll das Einbauelement bereitgestellt sein, um Turbulenzen innerhalb der Speicherkammer zu verhindern. Gemäß einer Ausführungsform ist das Einbauelement derart bereitgestellt, dass es in der Lage ist, eine pfropfenartige Strömung innerhalb der Speicherkammer zu erzeugen. Eine Pfropfenströmung ist insbesondere eine Strömung, bei der die Strömungsgeschwindigkeit in Hauptströmungsrichtung im Strömungsquerschnitt fast überall gleich hoch ist.

Das Innere der Speicherkammer kann grundsätzlich ohne Einbauelemente ausgestaltet sein. Wichtig ist es sicherzustellen, dass keine Zündquellen im Inneren vorhanden sind. Beim Einströmen des Purgegases in eine Speicherkammer ohne Einbauelemente gilt es dann zu verhindern, dass es zu sehr hohen Strömungsgeschwindigkeiten des überwiegend Wasserstoff enthaltenden Purgegases und damit zu Geschwindigkeitsdifferenzen zwischen dem einströmenden Purgegas und dem zunächst nahezu ruhenden Gas der Speicherkammer kommen kann. Dies stellt unter Umständen bereits eine Zünd- und Explosionsquelle dar, die zu verhindern ist. Bei heftiger und schneller turbulenter Vermischung des einströmenden Purgegases mit dem Gas in einer einfachen Speicherkammer ohne Einbauelemente könnte durch die heftigen Verwirbelungen in einem Behälter ohne Einbauten eine unerwünscht hohe Wasserstoffkonzentration sofort auch am Ausgang der Speicherkammer auftreten und in Folge davon auch ein sehr hoher Volumenstrom eines zünd- und explosionsfähigen Gemisches aus der Speicherkammer austreten.

Durch die Installation wenigstens eines Einbauelement, beispielsweise eines porösen Körpers und/oder eines Drahtgeflechts und/oder einer porösen Sinterscheibe, oder einer schwammartigen, offenporigen Struktur, insbesondere senkrecht zur Strömungsrichtung, vorzugsweise nahe des Purgegas-Eintritts, im Innern der Speicherkammer, kann dies verhindert werden. Gemäß einer Ausführungsform sind zwei oder mehr Einbauelemente in der Speicherkammer bereitgestellt, die entweder gleich oder unterschiedlich ausgestaltet sein können.

Es ist vorteilhaft, die Einbauelemente in ihrer Porosität in Strömungsrichtung zu verändern. Gemäß einer Ausführungsform sind zwei oder mehr Einbauelemente bereitgestellt, die sich in ihrer Eigenschaft, die Strömung innerhalb der Speicherkammer zu beeinflussen, unterscheiden. Beispielsweise kann stromauf ein Einbauelement mit niedrigerer Porosität und/oder mit kleinen Porengrößen und/oder mit geringer Dicke, installiert sein. Damit kann insbesondere auch eine Flammsperre realisiert werden, wenn die Porengrößen kleiner als der Löschabstand von Wasserstoff betragen. Hierzu reicht eine geringe Dicke der Schicht in Strömungsrichtung von wenigen Millimetern aus, die damit zu einem vorteilhaft geringen Strömungswiderstand und damit zu einem gewünscht sehr geringen Druckabfall über dieses Bauelement führt.

Innerhalb der Speicherkammer kann sich wenigstens ein Einbauelement befinden, aufweisend eine Wabenkörperstruktur, welche in Strömungsrichtung ausgerichtet ist und zu vielen einzelnen, sich senkrecht zur Strömungsrichtung nichtaustauschenden, laminaren Einzelstrompfaden führt. Gemäß einer Ausführungsform kann wenigstens ein Einbauelement eine schwammartige oder eine drahtgestrickartige Struktur mit sehr hohem und offenen Porenanteil von vorzugsweise > 80% aufweisen. Solche Einbauelemente vermindern sehr effektiv die makroskopischen Turbulenzen in der Speicherkammer und führen zu einer Strömung ähnlich der ideal gewünschten Pfropfenströmung. Gemäß einer Ausführungsform ist am ausgangsseitigen Ende der Speicherkammer zur erhöhten Sicherheit noch ein Flammsperrenelement bereitgestellt., ähnlich dem für den Eingangsbereich Beschriebenen. Die Abfuhr von sich in der Speicherkammer abscheidenden flüssigen Wassers aus den Purgegasen kann beispielsweise über Längsnuten an der Gehäusewand erleichtert werden. In einer für den Austrag des flüssigen Wasseranteils besonders vorteilhaften Ausführung ist die Speicherkammer senkrecht ausgerichtet und von oben nach unten durchströmt.

Weiterhin weist die Spülvorrichtung eine erste Schnittstelle zu wenigstens einer zu spülenden Komponente, insbesondere zu einer Elektrolyseeinrichtung und/oder zu einer Brennstoffzelleneinrichtung, auf. Unter einer Schnittstelle wird im Lichte der vorliegenden Erfindung insbesondere eine Verbindungsstelle beziehungsweise Trennstelle zwischen verschiedenen Komponenten verstanden. Über die Schnittstelle wird die Spülvorrichtung folglich mit anderen Komponenten verbunden.

Die erste Schnittstelle ist vor der Eingangsseite der Speicherkammer bereitgestellt. Gemäß einer Ausführungsform ist zwischen der ersten Schnittstelle und der Eingangsseite der Speicherkammer eine Ventileinrichtung bereitgestellt, beziehungsweise angeordnet. Gemäß einer Ausführungsform handelt es sich bei der ersten Schnittstelle um eine Verbindungseinrichtung. Darüber kann beispielsweise eine Verbindung zu wenigstens einer zu spülenden Komponente hergestellt werden, oder zu einer der zu spülenden Komponente zugeordneten Ventileinrichtung. Die erste Schnittstelle kann beispielsweise derart bereitgestellt sein, dass sie eine Verbindung zu einer Elektrolyseeinrichtung und/oder zu einer Brennstoffzelleneinrichtung, beziehungsweise einer davor geschalteten Ventileinrichtung realisiert oder realisieren kann.

Des Weiteren weist die Spülvorrichtung eine zweite Schnittstelle zu einer Pumpeneinrichtung, die vor der Eingangsseite der Speicherkammer bereitgestellt ist, auf.

Gemäß einer Ausführungsform sind die erste Schnittstelle und die zweite Schnittstelle als eigenständige, voneinander unabhängige Schnittstellen ausgebildet. Gemäß einer anderen Ausführungsform sind die erste Schnittstelle und die zweite Schnittstelle als eine einzige, gemeinsame Schnittstelle ausgebildet. Beispielsweise kann es sich bei der gemeinsamen Schnittstelle um ein Kreuzstück handeln.

Die Spülvorrichtung weist erfindungsgemäß auch eine Pumpeneinrichtung auf, die derart bereitgestellt ist, dass sie in der Lage ist, ein Prozessgas in die Speicherkammer bereitzustellen. Bei dem Prozessgas handelt es sich insbesondere um ein Gas, das mit dem in der Speicherkammer befindlichen gasförmigen Medium, etwa dem Spülgas, in Wechselwirkung tritt. Das Prozessgas kann je nach Anwendungsfall unterschiedlich sein. Gemäß einer Ausführungsform handelt es sich bei der Pumpeneinrichtung um eine Luftpumpeneinrichtung, die derart bereitgestellt ist, dass sie in der Lage ist, Luft in die Speicherkammer bereitzustellen. Gemäß einer Ausführungsform ist zwischen der Pumpeneinrichtung und der zweiten Schnittstelle eine Ventileinrichtung, beispielsweise ein Rückschlagventil, bereitgestellt beziehungsweise angeordnet. Gemäß einer Ausführungsform ist zwischen der Pumpeneinrichtung und der zweiten Schnittstelle eine Drosseleinrichtung, insbesondere eine Blendeneinrichtung, bereitgestellt beziehungsweise angeordnet. Eine Drosseleinrichtung hinter der Pumpeneinrichtung verhindert einen zu großen Überdruck und Flow durch die Pumpeneinrichtung. Gemäß einer Ausführungsform sind sowohl eine Ventileinrichtung als auch eine Drosseleinrichtung bereitgestellt.

Durch Verwendung einer solchen Pumpeneinrichtung wird der Volumenstrom an wasserstoffreichem Gas an der Vermischungsstelle nicht mehr durch den hohen, impulsartigen Purgevolumenstrom gegeben, sondern durch den viel kleineren und gleichmäßigeren Volumenstrom der Pumpeneinrichtung. In einer Ausführungsform wird über die Verwendung von wenigstens einem Einbauelement verhindert, dass das gasförmige Medium sich im Inneren der Speicherkammer sofort vermischt. Es entsteht keine Turbulenz, sondern eine pfropfenartige Strömung.

Durch die Pumpeneinrichtung wird das gasförmige Medium, welches als Spülgas beziehungsweise "Purge" aus einer zu spülenden Komponente austritt und in die Speicherkammer eintritt, unter anderem weiter verdünnt. Bevorzugte Bauarten für die Pumpeneinrichtung mit der vorliegenden Aufgabe sind die einer Membranpumpe oder die einer Drehschieberpumpe. Bei der Pumpeneinrichtung handelt es sich gemäß einer Ausführungsform um eine Ex-geschützte Pumpeneinrichtung.

Die vorliegende Erfindung hat insbesondere den Zweck, ein Spülsystem beziehungsweise ein Purgesystem bereitzustellen, welches speicherkammerseitig ohne bewegte Teile auskommt und keine Schnittstelle zu einer Wasserzu- und abfuhr benötigt. Insbesondere geht es darum, schlagartig ohne starken Gegendruck für die elektrochemischen Komponenten das Purgegas aufzunehmen und es dann kontrolliert abzugeben, um es ausreichend zu verdünnen. Die Erfindung nutzt dabei eine Anordnung von Pumpeneinrichtung und Ventileinrichtungen, die im System beispielsweise auch das Problem der Unterdruckvermeidung in einer Elektrolyseeinrichtung löst.

Gemäß einer Ausführungsform weist die Spülvorrichtung eine dritte Schnittstelle zu wenigstens einer, gasförmiges Medium aus der Spülvorrichtung abgebenden Komponente auf, die hinter der Ausgangsseite der Speicherkammer bereitgestellt ist. Bei dieser Komponente handelt es sich beispielsweise um eine Verteilungseinrichtung für das gasförmige Medium. In diesem Fall ist die dritte Schnittstelle als Schnittstelle zu einer Verteilungseinrichtung für das gasförmige Medium bereitgestellt. Gemäß einer Ausführungsform weist die Spülvorrichtung eine Verteilungseinrichtung für das gasförmige Medium auf. Gemäß einer Ausführungsform befindet sich hinter der dritten Schnittstelle eine Drosseleinrichtung, beispielsweise eine Blendeneinrichtung. Durch die Pumpeneinrichtung wird das gasförmige Medium, welches als Spülgas beziehungsweise "Purge" aus einer zu spülenden Komponente austritt und in die Speicherkammer eintritt, weiter verdünnt und durch die Drosseleinrichtung vor der Verteilungseinrichtung in Richtung der Verteilungseinrichtung gespült, bis ein unkritisches Gasgemisch, beispielsweise aus überwiegend Luft, vorliegt.

Gemäß einer Ausführungsform weist die Spülvorrichtung eine vierte Schnittstelle zu einem Reservoir zum Aufnehmen von aus dem gasförmigen Medium abgeschiedener Flüssigkeit oder mit dem gasförmigen Medium aus der zu spülenden Komponente ausgetragener Flüssigkeit auf. Die vierte Schnittstelle ist, in Strömungsrichtung gesehen, hinter der Ausgangsseite der Speicherkammer bereitgestellt. Gemäß einer Ausführungsform weist die Spülvorrichtung auch ein Reservoir zum Aufnehmen von aus dem gasförmigen Medium abgeschiedener Flüssigkeit auf. Das während des Spülvorgangs aus der zu spülenden Komponente austretende gasförmige Medium, beispielsweise Wasserstroff oder ein wasserstoffhaltiges Gas, ist in der Regel feucht. Die Feuchtigkeit kann als Flüssigkeit, beispielsweise Wasser, aus dem gasförmigen Medium in der Spülvorrichtung abgeschieden werden oder scheidet sich automatisch ab. Die Flüssigkeit kann für weitere Prozesse verwendet werden und sollte deshalb aufgefangen werden. Zudem sollte die Flüssigkeit aufgefangen werden, damit sie nicht unkontrolliert abläuft. Bei dem Reservoir kann es sich beispielsweise um einen Behälter oder um einen entsprechend ausgebildeten Bereich vor einer Ventileinrichtung, wie im weiteren Verlauf beschrieben wird, handeln, wobei der Bereich beispielsweise etwas räumlich tiefer positioniert ist.

Gemäß einer Ausführungsform sind die dritte Schnittstelle und die vierte Schnittstelle als eigenständige, voneinander unabhängige Schnittstellen ausgebildet. Gemäß einer anderen Ausführungsform sind die dritte Schnittstelle und die vierte Schnittstelle als eine einzige, gemeinsame Schnittstelle ausgebildet. Beispielsweise kann es sich bei der gemeinsamen Schnittstelle um ein T-Stück handeln. Gemäß einer Ausführungsform ist hinter der Speicherkammer ein T-Stück bereitgestellt beziehungsweise angeordnet, welches einerseits mit einer Drosseleinrichtung in eine Verteilungseinrichtung geht und zum anderen in eine weitere Ventileinrichtung führt. Die Verteilungseinrichtung ist insbesondere eine Vorrichtung, mit der das in Volumenstrom und Konzentration bereits vergleichmäßigte Purgegas dem umgebenden Luftvolumenstrom zugeführt wird. Die Ventileinrichtung und der Bereich davor sind in einer Ausführungsform etwas räumlich tiefer positioniert, um für die im gasförmigen Medium mittransportierte Feuchtigkeit, die als Flüssigkeit, beispielsweise Wasser, abgeschieden wird ein Reservoir zu bilden. Dadurch staut sich das Wasser immer vor der Ventileinrichtung.

Gemäß einer Ausführungsform weist die Spülvorrichtung eine fünfte Schnittstelle zu einer Einrichtung zum Austragen von Flüssigkeit aus der Spülvorrichtung auf.

Gemäß einer Ausführungsform weist die Spülvorrichtung eine oder mehrere den Durchfluss verändernde Komponenten auf, die insbesondere ausgewählt ist/sind aus der Gruppe, bestehend aus einer ersten Ventileinrichtung zwischen der ersten Schnittstelle und der Eingangsseite der Speicherkammer, einer ersten Drosseleinrichtung, insbesondere einer ersten Blendeneinrichtung zwischen der Pumpeneinrichtung und der zweiten Schnittstelle, einer zweiten Ventileinrichtung zwischen der Pumpeneinrichtung und der zweiten Schnittstelle, einer zweiten Drosseleinrichtung, insbesondere einer zweiten Blendeneinrichtung vor oder hinter der dritten Schnittstelle, einer dritten Ventileinrichtung vor der fünften Schnittstelle. Die einzelnen Komponenten können jeweils einzeln, oder aber in jeder beliebigen Kombination in der Spülvorrichtung bereitgestellt beziehungsweise angeordnet oder ausgebildet sein.

Bei der ersten Ventileinrichtung und der dritten Ventileinrichtung handelt es sich gemäß einer Ausführungsform um Magnetventile. Bei der zweiten Ventileinrichtung handelt es sich gemäß einer Ausführungsform um ein Rückschlagventil. Bei den Drosseleinrichtungen handelt es sich insbesondere um Einrichtungen, die den Volumenstrom eines Mediums, hier eines gasförmigen Mediums verändern können, beispielsweise hinsichtlich Menge, Geschwindigkeit, Druck, und dergleichen. Eine Blendeneinrichtung ist insbesondere eine bestimmte Drosseleinrichtung, die den Querschnitt eines Medienstroms, hier eines Gasstroms, etwa des Stroms des Prozessgases von der Pumpeneinrichtung oder des Stroms des gasförmigen Mediums, begrenzt. Durch die zweite Drosseleinrichtung wird insbesondere verhindert, dass das ausgetragene feuchte Purgegas ungedrosselt in die Umgebung, beispielsweise in einen Systemschrank, gegeben wird. Stattdessen kann die Abgabe wohl dosiert erfolgen. Die Abgabe erfolgt vorzugsweise ohne aktiv angesteuertes Ventil oder Steuerung.

Gemäß einer Ausführungsform weist die Spülvorrichtung eines oder mehrere Sensorelemente auf. Insbesondere ist das oder sind die Sensorelement(e) ausgewählt aus der Gruppe bestehend aus einem Drucksensorelement in der Speicherkammer, aus einem Drucksensorelement vor der Eingangsseite der Speicherkammer, einem Drucksensorelement hinter der Ausgangseite der Speicherkammer, einem Gas-Gehalts-Messelement in der Speicherkammer, einem Gas-Gehalts-Messelement hinter der Ausgangsseite der Speicherkammer, einem Element zur Funktionsdiagnose der Pumpeneinrichtung. Die einzelnen Sensorelemente können jeweils einzeln, oder aber in jeder beliebigen Kombination in der Spülvorrichtung bereitgestellt beziehungsweise angeordnet oder ausgebildet sein.

Der Druck in der Speicherkammer sollte abhängig vom Verhältnis Prozessgas zu gasförmigem Medium, insbesondere Luft/Wasserstoffverhältnis sein und somit anhand des Drucks möglicherweise auch diagnostizierbar sein, wann ein Gemisch bestehend aus dem gasförmigen Medium und dem Prozessgas, wieder unkritisch ist. Das kann über ein Drucksensorelement überwacht werden. In einer Ausführungsform weist die Spülvorrichtung wenigstens ein Sensorelement zur Bestimmung des Drucks in einer Verbindungsleitungseinrichtung hinter der Ausgangsseite der Speicherkammer auf. Darüber lässt sich insbesondere der Innendruck in der Speicherkammer bestimmen.

Gemäß einer Ausführungsform sind eine oder mehrere der den Durchfluss verändernden Komponenten und/oder eines oder mehrere der Sensorelemente in einem Block zusammengefasst. Dies bietet, insbesondere systemisch, einige Vorteile.

Wenn man die Ventileinrichtungen in einen Block zusammenzieht, wird dadurch eine Ventilbaugruppe in Form eines Moduls möglich. In diesem Block können beispielsweise die erste Ventileinrichtung und/oder die zweite Ventileinrichtung und/oder die dritte Ventileinrichtung vereinigt sein. Zusätzlich könnte in diesen Block auch noch eine Ventileinrichtung zu der zu spülenden Komponente integriert werden, beispielsweise eine Ventileinrichtung zur Elektrolyseeinrichtung und/oder eine Ventileinrichtung zur Brennstoffzelleneinrichtung.

Gemäß einer Ausführungsform ist der Block eine integrierte Baugruppe bestehend aus einer oder mehreren Ventileinrichtungen, beispielsweise der ersten und/oder zweiten Ventileinrichtung, optional der dritten Ventileinrichtung, wenigstens einem Sensorelement, beispielsweise einem Drucksensorelement, und einer oder mehreren Drosseleinrichtung(en), beispielsweise der ersten und/oder zweiten Drosseleinrichtung. An diesen Block müssen dann lediglich der Ausgang der Pumpeneinrichtung und die wenigstens eine zu spülende Komponente angeschlossen werden. In einer Ausführungsform können entsprechende Ventileinrichtungen zu der/den zu spülenden Komponente(en) ebenfalls in dem Block integriert sein. An diesem Block kann in einer Ausführungsform die Speicherkammer angeordnet, beispielsweise angeflanscht, sein oder werden. An diesem Block kann in einer Ausführungsform, alternativ oder zusätzlich, auch die Verteileinrichtung angeordnet, beispielsweise angeflanscht, sein oder werden. Dies bietet beispielsweise auch im Fehlermanagement und in der Zuordnung von Fehlerzuständen zu Modulen und verschiedenen Serviceszenarien eine deutlich bessere "Modultrennung".

Die einzelnen Komponenten der Spülvorrichtung sind gemäß einer Ausführungsform über eine Verbindungsleitungseinrichtung, welche Leitungsabschnitte aufweist, miteinander verbunden. Das Prozessgas und das gasförmige Medium strömen in der Spülvorrichtung durch diese Verbindungsleitungseinrichtung. Gemäß einer Ausführungsform sind die Abstände zwischen den Ventileinrichtungen und dem Abzweig zur Pumpeneinrichtung kurz. Dadurch liegt weniger passives Volumen aus Purge vor, welches nur durch Diffusion am "Spülvorgang" teilnimmt.

Gemäß dem zweiten Aspekt der Erfindung wird ein Spülsystem bereitgestellt, welches die Merkmale des unabhängigen Patentanspruchs 9 aufweist.

Zunächst weist das Spülsystem, welches zum Aufnehmen und/oder Zwischenspeichern und/oder kontrollierten Abgeben von einem gasförmigen Medium, insbesondere von während eines Purgevorgangs ausgetragenem Purgegas, bereitgestellt ist, eine Spülvorrichtung gemäß dem ersten Aspekt der Erfindung auf. Aus diesem Grund wird an dieser Stelle vollinhaltlich auch auf die vorstehenden Ausführungen zum ersten Aspekt der Erfindung, ebenso wie zur allgemeinen Beschreibung der Erfindung, vollinhaltlich Bezug genommen und verwiesen.

Das Spülsystem kann darüber hinaus zusätzliche Komponenten aufweisen.

Gemäß einer Ausführungsform weist das Spülsystem eine vierte Ventileinrichtung auf, die zur Verbindung mit einer Elektrolyseeinrichtung bereitgestellt ist. In einer anderen Ausführungsform kann diese vierte Ventileinrichtung auch Bestandteil der Spülvorrichtung sein und insbesondere in dem dort beschriebenen Block integriert sein.

Gemäß einer Ausführungsform weist das Spülsystem eine fünfte Ventileinrichtung auf, die zur Verbindung mit einer Brennstoffzelleneinrichtung bereitgestellt ist. In einer anderen Ausführungsform kann diese fünfte Ventileinrichtung auch Bestandteil der Spülvorrichtung sein und insbesondere in dem dort beschriebenen Block integriert sein.

Gemäß einer Ausführungsform ist die Ausgangsseite der Speicherkammer der Spülvorrichtung über die dritte Schnittstelle mit einer Verteilungseinrichtung für das aus der Speicherkammer abgegebene Medium verbunden. In diesem Fall ist die Verteilungseinrichtung ein Bestandteil des Spülsystems. Wie weiter oben beschrieben wurde, könnte die Verteileinrichtung in andrer Ausgestaltung auch Bestandteil der Spülvorrichtung sein. Wenn die Verteileinrichtung Bestandteil des Spülsystems ist, kann die Spülvorrichtung kompakter aufgebaut und insbesondere als Modul ausgebildet sein.

Gemäß einer Ausführungsform ist die Ausgangsseite der Speicherkammer der Spülvorrichtung über die vierte Schnittstelle mit einem Reservoir zum Aufnehmen von aus dem gasförmigen Medium abgeschiedener Flüssigkeit verbunden. In einer wie weiter oben beschriebenen Ausführungsform kann das Reservoir Bestandteil der Spülvorrichtung sein. Es ist aber auch denkbar, dass das Reservoir Bestandteil des Spülsystems ist. In diesem Fall kann die Spülvorrichtung kompakter aufgebaut und insbesondere als Modul ausgebildet sein.

Gemäß einer Ausführungsform ist die Spülvorrichtung über die fünfte Schnittstelle mit einer Einrichtung zum Austragen von Flüssigkeit aus der Spülvorrichtung verbunden. Über diese Einrichtung wird die Flüssigkeit aus der Spülvorrichtung und aus dem Spülsystem ausgetragen. Die Einrichtung kann Bestandteil des Spülsystems sein, oder aber auch Bestandteil des Energiesystems. Die Einrichtung zum Austragen von Flüssigkeit kann beispielsweise eine Flüssigkeitssammeleinrichtung aufweisen, in der die in der Spülvorrichtung ausgetragene Flüssigkeit, beispielsweise Wasser, eingeleitet wird. Zusätzlich kann hier auch bei anderen Prozessen entstehende Flüssigkeit gesammelt werden, beispielsweise Lüftungskondensat. Über eine Abwasserpumpe und/oder die sechste Ventileinrichtung kann die Flüssigkeit aus der Flüssigkeitssammeleinrichtung einem Abwasserbehälter oder dergleichen zugeführt werden.

Gemäß dem dritten Aspekt der Erfindung wird ein Energiesystem bereitgestellt, welches die Merkmale des unabhängigen Patentanspruchs 12 aufweist. Das Energiesystem, welches insbesondere als ein Gebäudeenergiesystem ausgebildet ist, weist eine Elektrolyseeinrichtung, eine Brennstoffzelleneinrichtung, optional eine Hochdruckspeichereinrichtung oder eine andere geeignete Speichereinrichtung für Wasserstoff, insbesondere einen Mitteldruckspeicher oder einen Metallhydridspeicher, sowie eine Verbindungsleitungseinrichtung auf, über die die Elektrolyseeinrichtung, die Brennstoffzelleneinrichtung sowie optional die Speichereinrichtung miteinander verbunden sind.

Erfindungsgemäß weist das Energiesystem eine Spülvorrichtung gemäß dem ersten Aspekt der Erfindung, oder ein Spülsystem gemäß dem zweiten Aspekt der Erfindung auf. Aus diesem Grund wird an dieser Stelle auch auf die vorstehenden Ausführungen zum ersten Aspekt der Erfindung, zum zweiten Aspekt der Erfindung, ebenso wie zur allgemeinen Beschreibung der Erfindung, vollinhaltlich Bezug genommen und verwiesen.

Vorzugsweise ist die Spülvorrichtung in einem ersten Untersystem des Energiesystems angeordnet. Insbesondere ist die Spülvorrichtung in einem, insbesondere belüfteten, vorzugsweise stationären, Systemschrank des Energiesystems angeordnet. Die in einem Systemschrank angeordnete Spülvorrichtung ist somit vor Witterungseinflüssen, beispielsweise vor Regen, Frost, UV-Strahlung, und dergleichen, geschützt. Der Systemschrank wird im Betrieb vorzugsweise von einem stetigen Luftvolumenstrom durchströmt, beispielsweise bei Temperaturen zwischen 5°C und maximal 70°C. Das in der Speichervorrichtung zwischengespeicherte Spülgas wird bevorzugt in kontrollierter Weise in diesen Luftvolumenstrom eingebracht, so dass keine unerwünschten, schädlichen Zündquellen entstehen können.

Vorzugsweise weist die Spülvorrichtung oder das Spülsystem oder das Energiesystem eine Steuereinrichtung zur Steuerung einzelner Komponenten auf. Beispielsweise kann die Spülvorrichtung oder das Spülsystem eine eigenständige Steuereinrichtung aufweisen. Die vorgenannte Steuereinrichtung kann allerdings auch Bestandteil der Steuereinrichtung des Energiesystems sein. Insbesondere weist die Steuereinrichtung Schnittstellen zu den einzelnen Komponenten auf, beispielsweise zu zumindest einzelnen Ventileinrichtungen, etwa zu der ersten und/oder zweiten und/oder dritten und/oder vierten und/oder fünften und/oder sechsten Ventileinrichtung, und/oder zu zumindest einzelnen Drosselelementen, etwa dem ersten und/oder zweiten Drosselelement und/oder zu zumindest einzelnen Sensorelementen, etwa einem Drucksensorelement in der Speicherkammer und/oder einem Drucksensorelement vor der Eingangsseite der Speicherkammer und/oder einem Drucksensorelement hinter der Ausgangseite der Speicherkammer und/oder einem Gas-Gehalts-Messelement in der Speicherkammer und/oder einem Gas-Gehalts-Messelement hinter der Ausgangsseite der Speicherkammer und/oder einem Element zur Funktionsdiagnose der Pumpeneinrichtung.

Die Steuereinrichtung ist insbesondere die Gesamtheit aller Komponenten, welche die Beeinflussung der Spülvorrichtung oder des Spülsystems bewirken. Die Steuereinrichtung kann in Form von Hardwarekomponenten oder Softwarekomponenten, oder als eine Kombination daraus, ausgebildet sein. Insbesondere weist die Steuereinrichtung eine Prozessoreinrichtung auf, in der zumindest Teile des erfindungsgemäßen Verfahrens gemäß dem vierten Aspekt der Erfindung ablaufen. Je nach Ausgestaltung ist die Steuereinrichtung zumindest teilweise Bestandteil der Spülvorrichtung oder des Spülsystems oder des Energiesystems. Oder die Steuereinrichtung ist ein dazu externes Bauteil, welches dann über die Schnittstellen mit der Spülvorrichtung oder dem Spülsystem oder dem Energiesystem zumindest zeitweilig, beispielsweise drahtlos oder drahtgebunden, verbunden ist und kommuniziert.

Gemäß dem vierten Aspekt der Erfindung wird ein Verfahren bereitgestellt, welches die Merkmale des unabhängigen Patentanspruchs 13 aufweist. Das Verfahren dient zum Aufnehmen und/oder Zwischenspeichern von Gas, insbesondere von während eines Purgevorgangs ausgetragenem Purgegas.

Vorzugsweise wird das Verfahren mittels einer Spülvorrichtung gemäß dem ersten Aspekt der Erfindung und/der einem Spülsystem gemäß dem zweiten Aspekt der Erfindung und/oder in einem Energiesystem gemäß dem dritten Aspekt der Erfindung ausgeführt. Zur Vermeidung von Wiederholungen wird an dieser Stelle, insbesondere hinsichtlich der Funktionsweise des Verfahrens, vollinhaltlich auch auf die allgemeine Beschreibung der Erfindung weiter oben sowie auf die Ausführungen zur Spülvorrichtung gemäß dem ersten Aspekt der Erfindung, die Ausführungen zum Spülsystem gemäß dem zweiten Aspekt der Erfindung sowie auf die Ausführungen zum Energiesystem gemäß dem dritten Aspekt der Erfindung Bezug genommen und verwiesen.

Das erfindungsgemäße Verfahren läuft unter Verwendung einer Spülvorrichtung ab, welche aufweist eine volumenkonstante Speicherkammer für das gasförmige Medium, die eine Eingangsseite und eine Ausgangsseite aufweist, eine erste Schnittstelle zu wenigstens einer zu spülenden Komponente, insbesondere zu einer Elektrolyseeinrichtung und/oder zu einer Brennstoffzelleneinrichtung, die vor der Eingangsseite der Speicherkammer bereitgestellt ist, eine zweite Schnittstelle zu einer Pumpeneinrichtung, die vor der Eingangsseite der Speicherkammer bereitgestellt ist, und eine Pumpeneinrichtung, insbesondere eine Luftpumpeneinrichtung, die derart bereitgestellt ist, dass sie in der Lage ist, ein Prozessgas, insbesondere Luft, in die Speicherkammer bereitzustellen,

Erfindungsgemäß ist das Verfahren durch folgende Schritte gekennzeichnet:
a) im Ausgangszustand des Verfahrens ist die Speicherkammer, vorzugsweise drucklos, mit Prozessgas, insbesondere mit Luft, gefüllt;
b) bei Spülbeginn wird gasförmiges Medium, bei dem es sich um Spülgas handelt welches insbesondere feucht ist, aus einer zu spülenden Komponente über die erste Schnittstelle an der Eingangsseite in die Speicherkammer eingebracht, und die in der Speicherkammer befindliche Prozessgassäule wird über die Ausgangsseite der Speicherkammer ausgetragen;
c) nach Beendigung des Einbringens, optional auch während des Einbringens des gasförmigen Mediums in die Speicherkammer wird die Pumpeneinrichtung aktiviert und Prozessgas in die Speicherkammer gepumpt, wodurch das gasförmige Medium in der Speicherkammer verdünnt wird und das verdünnte Medium über die Ausgangsseite aus der Speicherkammer hinausgedrückt wird;
d) das verdünnte gasförmige Medium wird aus der Spülvorrichtung ausgetragen;
e) anschließend wird die Spülvorrichtung in den Ausgangszustand versetzt und die Speicherkammer, vorzugsweise drucklos, mit Prozessgas, insbesondere mit Luft, gefüllt.

Wenn das Purgegas stoßartig, also mit impulsförmig überhöhtem Volumenstrom in den Purgebehälter einströmt und das Gas am Ausgang über mindestens eine Drosselstelle abströmt, wird sich während des Purgens eine Druckerhöhung in der Speicherkammer einstellen, welche während der nachfolgenden Ausströmung wieder abgebaut wird. Der ausgangsseitige Druckverlust und damit die Druckerhöhung in der Speicherkammer wird insbesondere über die Auslegung der Rohrleitungen, der verschiedenen Drosselstellen und durch den Fördervolumenstrom der Luftpumpeneinrichtung bestimmt und sollte möglichst gering sein.

Gemäß einer Ausführungsform wird das verdünnte gasförmige Medium über eine dritte Schnittstelle der Spülvorrichtung, die hinter der Ausgangsseite der Speicherkammer bereitgestellt ist, zu wenigstens einer, gasförmiges Medium aus der Speicherkammer abgebenden Komponente, insbesondere zu einer Verteilungseinrichtung für das gasförmige Medium, ausgetragen. Von dort wird das gasförmige Medium, das nunmehr ausreichend unter die Zündgrenze verdünnt und insoweit nicht mehr gefährlich ist, anschließend an die Umgebung abgegeben.

Gemäß einer Ausführungsform wird aus dem gasförmigen Medium abgeschiedene oder mit dem gasförmigen Medium ausgetragene Flüssigkeit oder Feuchtigkeit über eine vierte Schnittstelle der Spülvorrichtung, die hinter der Ausgangsseite der Speicherkammer bereitgestellt ist, in ein Reservoir zum Aufnehmen von Flüssigkeit ausgetragen.

Nachfolgend wird ein konkreteres Ausführungsbeispiel über den Ablauf des Verfahrens beschrieben. Im Ausgangszustand ist die Speicherkammer mit Prozessgas, beispielsweise Luft gefüllt, und die Ventileinrichtungen sind geschlossen. Vor der ersten Ventileinrichtung ist ein Kreuzstück angebracht, welches eine Zusammenfassung der ersten und zweiten Schnittstelle darstellt. Ein Ende kommt von der fünften Ventileinrichtung von der Brennstoffzelleneinrichtung, eines von der vierten Ventileinrichtung von der Elektrolyseeinrichtung und eines geht zunächst zu einer Pumpeneinrichtung in Form einer Luftpumpe. Zwischen Luftpumpe und Kreuzstück liegen eine erste Drosseleinrichtung in Form einer ersten Blendeneinrichtung und die zweite Ventileinrichtung. Die Speicherkammer ist mit einem Drucksensorelement überwacht.

Im Ausgangszustand ist die Speicherkammer drucklos mit Prozessgas, beispielsweise Luft gefüllt und die Ventileinrichtungen sind geschlossen. Kommt es zum Purge werden die erste Ventileinrichtung und wahlweise die vierte oder fünfte Ventileinrichtung, je nachdem welche Komponente gespült wird, und die dritte Ventileinrichtung geöffnet. Dadurch wird die Luftsäule in der Speicherkammer und den Gasleitungsabschnitten nach der Ausgangsseite der Speicherkammer verdrängt und verlässt die Spülvorrichtung, beispielsweise über die Verteilungseinrichtung. Ist der Purge beendet, wird die dritte Ventileinrichtung und wahlweise die vierte/fünfte Ventileinrichtung geschlossen, während die erste Ventileinrichtung geöffnet bleibt. Das Volumen der Speicherkammer muss so gewählt werden, dass das Behältervolumen das Purgevolumen übersteigt, damit kein gasförmiges Medium, beispielsweise Wasserstoff oder wasserstoffreiches Gas die Spülvorrichtung schwallartig verlässt. Nun ist die Speicherkammer mit einem Purge-Luftgemisch gefüllt und liegt zwischen den vierten/fünften Ventileinrichtungen, der zweiten Ventileinrichtung vor der Pumpeneinrichtung und der dritten Ventileinrichtung an. Nun beginnt die Pumpeneinrichtung zu laufen. Alternativ läuft sie bereits während des Purges. Die erste Drosseleinrichtung, beispielsweise die erste Blendeneinrichtung hinter der Pumpeneinrichtung verhindert einen zu großen Überdruck und Flow durch die Pumpeneinrichtung. Durch die Pumpeneinrichtung wird der Purge weiter verdünnt und durch die zweite Drosseleinrichtung, insbesondere die zweite Blendeneinrichtung vor der Verteilungseinrichtung in Richtung der Verteilungseinrichtung gespült, bis im Volumen ein unkritisches Gemisch aus überwiegend Luft vorliegt. Dann wird auch die erste Ventileinrichtung wieder geschlossen. Die Flüssigkeit, beispielsweise das Wasser, das der Purge mit sich trägt, wurde während des Purges vor die dritte Ventileinrichtung der Spülvorrichtung transportiert und sammelt sich dort an, beispielsweise in dem Reservoir. Durch das Öffnen der dritten Ventileinrichtung vor dem nächsten Purge oder sofort, um die Spülvorrichtung drucklos zu machen, wird die Flüssigkeit aus der Spülvorrichtung befördert. Spätestens der nächste Purge befördert auch die letzten Reste Flüssigkeit aus der Spülvorrichtung.

Die Erfindung wird nun anhand von verschiedenen Ausführungsbeispielen unter Bezugnahme auf die beiliegenden Zeichnungen näher erläutert. Es zeigen
- Figur 1: in schematischer Ansicht ein erfindungsgemäßes Energiesystem mit einer erfindungsgemäßen Spülvorrichtung;
- Figur 2: den grundlegenden Aufbau eines Ausführungsbeispiels der erfindungsgemäßen Spülvorrichtung;
- Figuren 3 bis 8: verschiedene Betriebszustände der erfindungsgemäßen Spülvorrichtung; und
- Figur 9: den grundlegenden Aufbau einer Einrichtung zum Austragen von Flüssigkeit, welche mit der Spülvorrichtung zusammenwirkt.

Die vorliegende Erfindung betrifft eine Spülvorrichtung zum Aufnehmen und/oder Zwischenspeichern von Gas, insbesondere von während eines Purgevorgangs ausgetragenem Purgegas, die insbesondere Bestandteil eines Spülsystems ist, wobei die Spülvorrichtung oder das Spülsystem in einem Energiesystem eingesetzt wird. Bei dem Energiesystem handelt es sich insbesondere um eine Gebäudeenergiesystem.

In den Figuren werden verschiedene Ausführungsbeispiele beschrieben. Die verschiedenen Ausführungsbeispiele weisen in großen Teilen Übereinstimmungen auf, wobei jeweils identische Bauteile mit identischen Bezugsziffern versehen wird. Ein Bauteil mit einer bestimmten Bezugsziffer, welches im Zusammenhang mit einer Figur beschrieben wird, gilt deshalb in entsprechender Weise vollumfänglich auch im Zusammenhang mit den jeweils anderen Figuren und Ausführungsbeispielen, selbst wenn es dort in der Beschreibung nicht explizit erwähnt wird.

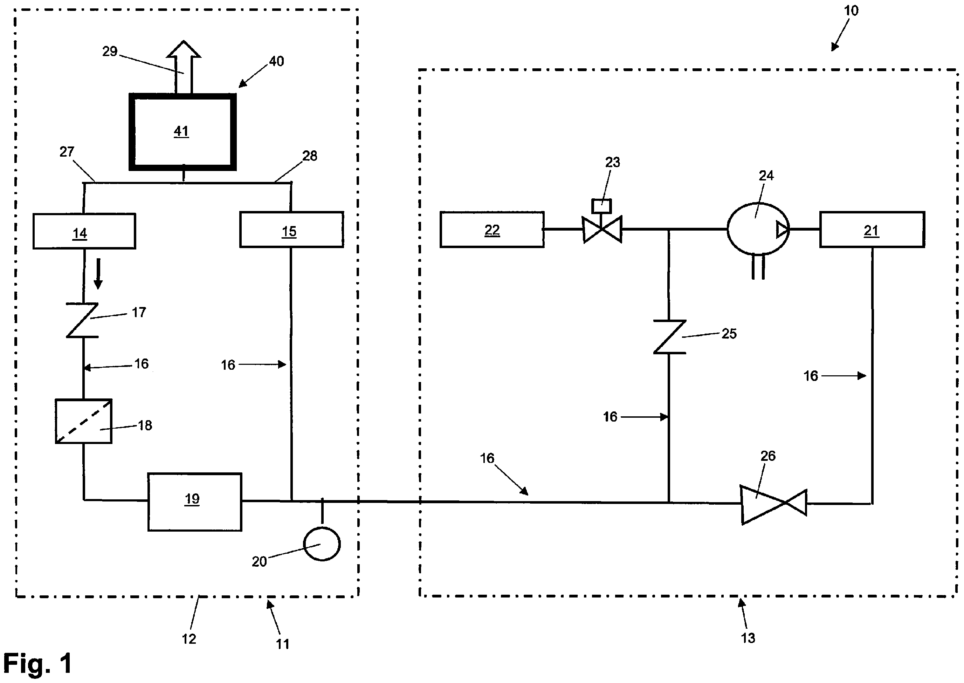

In Figur 1 wird zunächst der grundsätzliche Aufbau des Energiesystems 10 beschrieben.

Wie aus Figur 1 ersichtlich ist, weist das Energiesystem 10 ein erstes Untersystem 11 auf, welches als Innensystem ausgebildet ist. Das bedeutet, dass sich das erste Untersystem 11 innerhalb des Gebäudes befindet. Die einzelnen Komponenten des ersten Untersystems 11 sind im gezeigten Beispiel in einem Systemschrank 12 untergebracht. Zusätzlich weist das Energiesystem 10 ein zweites Untersystem 13 in Form eines Außensystems auf. Das bedeutet, dass sich das zweite Untersystem 13 außerhalb des Gebäudes befindet.

Das erste Untersystem 11 weist eine Elektrolyseeinrichtung 14 zur Herstellung von Wasserstoff auf. Zudem weist das erste Untersystem 11 eine Brennstoffzelleneinrichtung 15 auf. Das zweite Untersystem 13 verfügt über eine Hochdruckspeichereinrichtung 21. In der Hochdruckspeichereinrichtung 21 wird der in der Elektrolyseeinrichtung 14 erzeugte Wasserstoff bei bis zu 700 bar gespeichert. Zusätzlich verfügt das zweite Untersystem 13 über eine Mitteldruckspeichereinrichtung 22, in der der erzeugte Wasserstoff bei Drücken zwischen 20 und 60 bar zwischengespeichert wird, bevor er von dort endgültig über eine Kompressionseinrichtung in die Hochdruckspeichereinrichtung 21 gefördert und dort gespeichert wird.

Die einzelnen Komponenten des Energiesystems 10 sind über eine Verbindungsleitungseinrichtung 16 miteinander verbunden, die aus einer Anzahl unterschiedlicher Leitungsabschnitte besteht. Einzelne Leitungsabschnitte sind dabei als so genannte bidirektionale Leitungsabschnitte ausgebildet.

Der in der Elektrolyseeinrichtung 14 hergestellte Wasserstoff verlässt die Elektrolyseeinrichtung 14 in Pfeilrichtung über einen Leitungsabschnitt der Verbindungsleitungseinrichtung 16, in dem sich in Strömungsrichtung des erzeugten Wasserstoffs beispielsweise eine Rückschlagventileinrichtung 17 sowie nachfolgend eine Filtereinrichtung 18 und eine Trocknereinrichtung 19 befinden, in denen der erzeugte Wasserstoff gefiltert und getrocknet wird. Die Filtereinrichtung 18 und die Trocknereinrichtung 19 können sich alternativ auch im zweiten Untersystem 13 befinden.

Von der Trocknereinrichtung 19 strömt der erzeugte Wasserstoff über weitere Leitungsabschnitte der Verbindungsleitungseinrichtung 16 zu einer weiteren Rückschlagventileinrichtung 25 in dem zweiten Untersystem 13. Von dort gelangt der erzeugte Wasserstoff zunächst in die Mitteldruckspeichereinrichtung 22, welche über eine Ventileinrichtung 23, die insbesondere als Sperrventil, beispielsweise in Form eines Magnetventils, ausgebildet ist, an der Verbindungsleitungseinrichtung 16 angebunden ist. Vor der Hochdruckspeichereinrichtung 21 befindet sich in der Verbindungsleitungseinrichtung 16 eine Kompressoreinrichtung 24, insbesondere in Form eines Kolbenkompressors. Der in der Mitteldruckspeichereinrichtung 22 zwischengespeicherte Wasserstoff wird unter Betätigung der Kompressoreinrichtung 24 in die Hochdruckspeichereinrichtung 22 eingespeichert.

Dieser Herstellungsvorgang des Wasserstoffs bis hin zu dessen Einspeicherung in die Hochdruckspeichereinrichtung 21 stellt eine erste Betriebsweise des Energiesystems 10 dar. Bei dieser ersten Betriebsweise des Energiesystems 10 herrscht in der Verbindungsleitungseinrichtung 16 ein Druck von 20 bis 60 bar. Ein solcher Druck herrscht auch in der Mitteldruckspeichereinrichtung 22. Über die Kompressoreinrichtung 24 wird der aus der Mitteldruckspeichereinrichtung 22, bei der es sich um einen Zwischenspeicher handelt, entnommene Wasserstoff mittels der Kompressoreinrichtung 24 so weit komprimiert, dass er mit Drücken von bis zu 700 bar in die Hochdruckspeichereinrichtung 21 eingespeichert werden kann.

Der in der Hochdruckspeichereinrichtung 21 gespeicherte Wasserstoff wird für den Betrieb der Brennstoffzelleneinrichtung 15 verwendet. Der Betrieb der Brennstoffzelleneinrichtung 15 erfolgt in der zweiten Betriebsweise des Energiesystems 10. Die Brennstoffzelleneinrichtung 15 kann aber nur bei Drücken kleiner 20 bar arbeiten. In der zweiten Betriebsweise des Energiesystems 10 wird der Wassersoff aus der Hochdruckspeichereinrichtung 21 entnommen, über eine Entspannungseinrichtung 26 in Form eines Druckminderers entspannt, bevor er in die Brennstoffzelleneinrichtung 15 eintritt. Zur Messung des Drucks ist wenigstes eine Druckmesseinrichtung 20, beispielsweise in Form eines Drucksensors vorgesehen.

Das in Figur 1 dargestellte Energiesystem 10 stellt einen Teilbereich eines Gesamt-Gebäudeenergiesystems dar, bei dem es sich um ein elektrisch autarkes und vollständig auf erneuerbaren Energien beruhendes multihybrides Gebäudeenergiespeichersystem handelt.

Das multihybride Gebäudeenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei agiert das System als Inselsystem unabhängig vom elektrischen Netz. Vielmehr soll die Anlage die elektrische Autarkie des Gebäudes gewährleisten, sodass über das ganze Jahr hinweg keine elektrische Energie aus dem Stromnetz bezogen werden muss.

Die primäre Aufgabe des Gebäudeenergiesystems ist es, die gewonnene elektrische Energie aus Photovoltaik (PV)-Modulen oder dergleichen dem Verbraucher im Gebäude verfügbar zu machen. Sekundär können in Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Wohnraumlüftung durch ein verbautes Lüftungsgerät.

Der in der Elektrolyseeinrichtung produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleinnrichtung den zusätzlichen elektrischen Energiebedarf decken. Im Brennstoffzellenbetrieb fließt der Wasserstoff über die Wasserstoffleitung aus der Druckspeicheranlage zur Brennstoffzelleneinrichtung.

Ein zeitgleicher Betrieb von Brennstoffzelleneinrichtung und Elektrolyseeinrichtung ist im Regelbetrieb ausgeschlossen, da dies energetisch unsinnig wäre. Nicht auszuschließen ist aber ein zeitgleicher Betrieb für sehr kurze Zeit und für definierte Zwecke einer Systemkonditionierung. Das gesamte System wird zentral über einen Energy Manager mit einem prädiktiven Energiemanagement betrieben.

Das zweite Untersystem ist prinzipiell für den Betrieb im Außenbereich vorgesehen, kann aber unter bestimmten Bedingungen auch innerhalb eines speziellen Bereichs des Hauses errichtet und betrieben werden.

Während des Betriebs des Energiesystems 10 ist es erforderlich, dass die Elektrolyseeinrichtung 14 sowie die Brennstoffzelleneinrichtung 15 regelmäßig gespült werden, wobei die Brennstoffzelleneinrichtung 15 insbesondere auf der Anodenseite und die Elektrolyseeinrichtung 14 insbesondere auf der Kathodenseite gespült werden. Ein Spülen ist insbesondere erforderlich, um unerwünschte Fremdgasanteile, sowie sich lokal in den Zellstrukturen ansammelndes flüssiges Wasser, die die Leistungsfähigkeit und die Lebensdauer der Brennstoffzelleneinrichtung 15 und/oder der Elektrolyseeinrichtung 14 negativ beeinflussen können, in regelmäßigen Abständen oder abhängig von den Betriebszuständen abzuführen.

Das Spülen erfolgt unter Zuhilfenahme eines Spülsystems 40, welches wiederum eine Spülvorrichtung 41 aufweist. Das während des Spülprozesses aus der Elektrolyseeinrichtung 14 und/oder der Brennstoffzelleneinrichtung 15 ausgetragene feuchte Spülgas, welches auch als Purgegas bezeichnet wird, darf nicht ohne Weiteres, insbesondere nicht ungedrosselt, insbesondere nicht in Form eines stark impulsartigen Stoffstromes mit hohem Wasserstoffanteil, nach außen, beispielsweise in den Systemschrank 12 abgegeben werden, da sich ansonsten eine explosionsfähige Zone bilden kann. Um eine kontrollierte Abgabe zu ermöglichen, wird das aus der Elektrolyseeinrichtung 14 und/oder aus der Brennstoffzelleneinrichtung 15 ausgetragene Spülgas in einer Spülvorrichtung 41 aufgefangen und zwischengespeichert. Dazu ist die Spülvorrichtung 41 über einen ersten Leitungsabschnitt 27 mit der Elektrolyseeinrichtung 14, und über einen zweiten Leitungsabschnitt 28 mit der Brennstoffzelleneinrichtung 15 verbunden. Dadurch kann die Spülvorrichtung 41 wahlweise zur Zwischenspeicherung von Spülgas aus der Elektrolyseeinrichtung 14 und der Brennstoffzelleneinrichtung 15 verwendet werden. Aus der Spülvorrichtung 41 kann das zwischengespeicherte Spülgas dann kontrolliert und bezüglich der Höhe des Stoffstromes erniedrigt und vergleichmäßigt in den Systemluftstrom 29, beispielsweise in den Systemschrank 12 oder nach außerhalb gegeben werden.

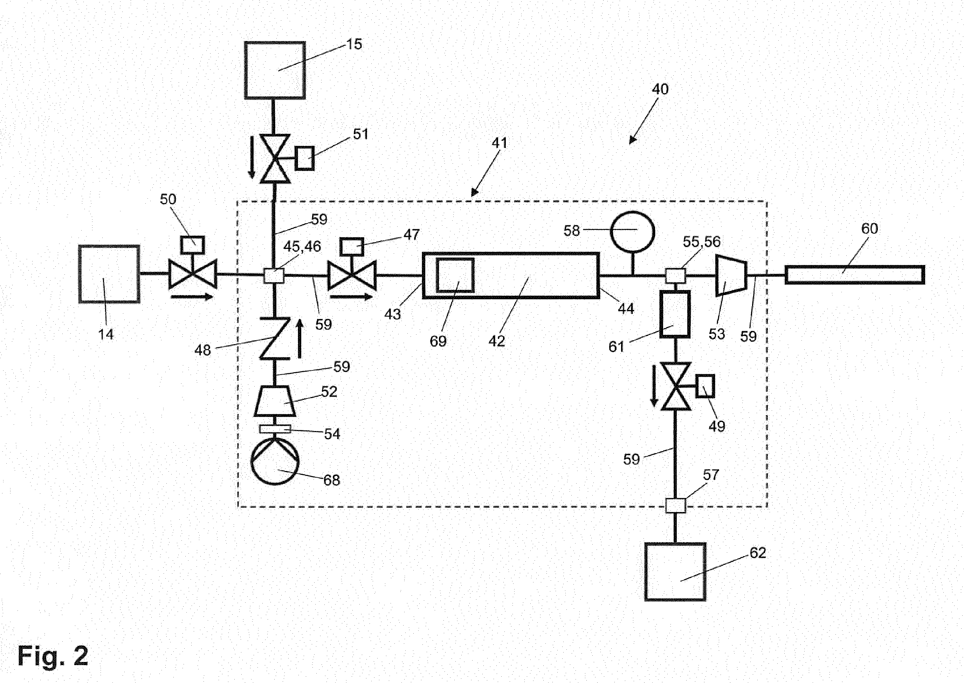

Anhand der Figuren 2 bis 9 wird nun beschrieben, wie eine erfindungsgemäße Spülvorrichtung 41 beziehungsweise ein Spülsystem 40 ausgestaltet sein kann.

Im Zusammenhang mit Figur 2 wird zunächst der allgemeine Aufbau der Spülvorrichtung 41 beschrieben, welche Bestanteil eines Spülsystems ist. Die Spülvorrichtung 41 weist zunächst eine volumenkonstante, das heißt unveränderliche Speicherkammer 42 auf, die eine Eingangsseite 43 und eine Ausgangsseite 44 aufweist. Die Eingangsseite 43 ist über einen Leitungsabschnitt einer Verbindungsleitungseinrichtung 59 mit einer ersten Ventileinrichtung 47 in Form eines Magnetventils verbunden. Im Bereich der Eingangsseite 43 ist in der Speicherkammer 42 ein Einbauelement 69 bereitgestellt, welches bereitgestellt ist, die Strömung innerhalb der Speicherkammer 42 zu beeinflussen. Eingangsseitig der Speicherkammer 42 befinden sich vor der Eingangsseite 43 zudem eine erste Schnittstelle 45 und eine zweite Schnittstelle 46. Beide Schnittstellen 45, 46 sind zu einer gemeinsamen Schnittstelle zusammengefasst und beispielsweise in Form eines Kreuzstücks ausgebildet. Die erste Ventileinrichtung 47 befindet sich zwischen der ersten/zweiten Schnittstelle 45, 46 und der Eingangsseite 43 der Speicherkammer 42. Die erste Schnittstelle 45 ist über einen Leitungsabschnitt der Verbindungsleitungseinrichtung 59 mit einer vierten Ventileinrichtung 50 in Form eines Magnetventils und über diese mit der Elektrolyseeinrichtung 124 verbunden. Zudem ist die erste Schnittstelle 45 über einen Leitungsabschnitt der Verbindungsleitungseinrichtung 59 mit einer fünften Ventileinrichtung 51 und über diese mit der Brennstoffzelleneinrichtung 15 verbunden.

Eine Pumpeneinrichtung 68 in Form einer Luftpumpeneinrichtung ist mit der zweiten Schnittstelle 46 verbunden. In einem Leitungsabschnitt der Verbindungsleitungseinrichtung 59 zwischen Pumpeneinrichtung 68 und zweiter Schnittstelle 46 sind eine zweite Ventileinrichtung 48 in Form eines Rückschlagventils, eine erste Drosseleinrichtung 52 in Form einer ersten Blendeneinrichtung und eine Element 54 zur Funktionsdiagnose der Pumpeneinrichtung in Form eines Druckschalters angeordnet.

Die Speicherkammer 42 weist ein Behältervolumen auf, das so groß bemessen ist, dass es das Purgevolumen, das heißt das Volumen des Spülschritts, übersteigt.

Der Druck in der Speicherkammer 42 wird mit einem Drucksensorelement 58 gemessen, welches sich ausgangsseitig hinter der Ausgangsseite 44 der Speichereinrichtung 42 in einem Leitungsabschnitt der Verbindungsleitungseinrichtung 59 befindet. Das Drucksensorelement 58 könnte sich zusätzlich oder alternativ auch im Bereich der ersten und zweiten Schnittstellen 45, 46 befinden.

Hinter der Ausgangsseite 44 der Speicherkammer 42 sind eine dritte Schnittstelle 55 und eine vierte Schnittstelle 56 bereitgestellt. Auch diese können beispielsweise in Form einer einzigen gemeinsamen Schnittstelle realisiert sein, die beispielsweise in Form eines T-Stücks ausgebildet ist.

Über die dritte Schnittstelle 55 ist die Speicherkammer 42 über einen Leitungsabschnitt der Verbindungsleitungseinrichtung 59 mit einer Verteilungseinrichtung 60 verbunden, die im gezeigten Beispiel Bestandteil des Spülsystems 40 ist. Zwischen der dritten Schnittstelle 55 und der Verteilungseinrichtung 60 befindet sich eine zweite Drosseleinrichtung 53 in Form einer zweiten Blendeneinrichtung.

Über die vierte Schnittstelle 56 ist die Ausgangsseite 44 der Speicherkammer 42 über einen Leitungsabschnitt der Verbindungsleitungseinrichtung 59 mit einer dritten Ventileinrichtung 49 in Form eines Magnetventils verbunden. Zwischen der vierten Schnittstelle 56 und der dritten Ventileinrichtung 49 befindet sich ein Reservoir 61 zur Aufnahme von Flüssigkeit, die aus dem feuchten gasförmigen Medium, dem Purgegas, oder mit dem gasförmigen Medium, ausgetragen wurde. Das Flüssigkeitsreservoir 61 kann entweder in Form eines Behälters, oder aber in Form eines besonders ausgestalteten, beispielsweise erweiterten, Leitungsabschnitts der Verbindungsleitungseinrichtung 59 ausgebildet sein. Die dritte Ventileinrichtung 49 und der Bereich davor, das heißt das Reservoir 61 sind idealerweise etwas räumlich herabgesetzt, um einen Auffang für die im Purge mittransportierte Flüssigkeit, beispielsweise Wasser, zu bilden. Dadurch staut sich die Flüssigkeit immer vor der dritten Ventileinrichtung 49. In Strömungsrichtung hinter der dritten Ventileinrichtung 49 weist die Spülvorrichtung 41 eine fünfte Schnittstelle 57 zu einer Einrichtung 62 zum Austragen von Flüssigkeit auf.

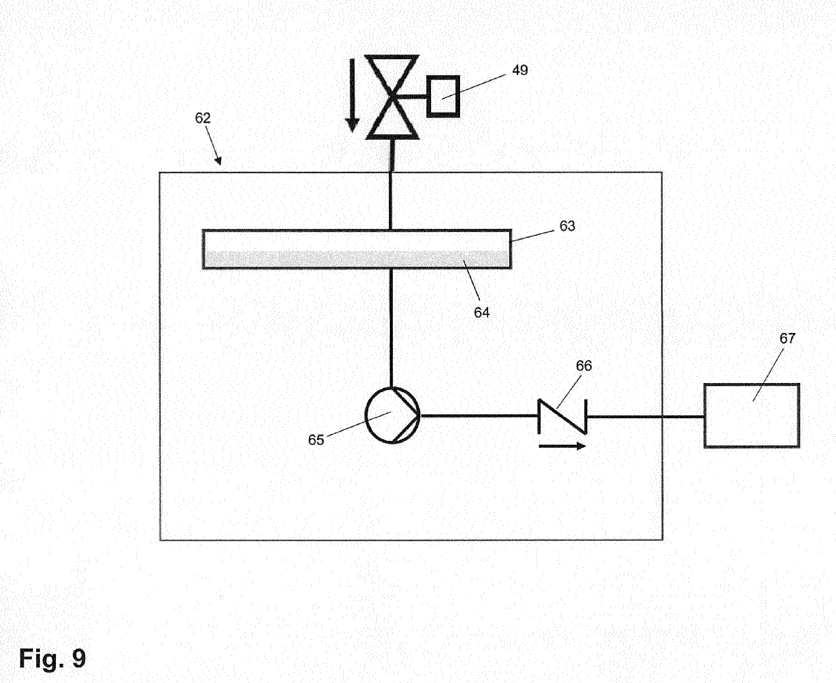

Die Einrichtung 62 wird nun anhand von Figur 9 näher erläutert. Wird die dritte Ventileinrichtung 49 geöffnet, fließt die Flüssigkeit aus dem Reservoir 61, wie in Figur 2 dargestellt, in die Einrichtung 62 zum Austragen von Flüssigkeit, die hierzu beispielsweise eine Flüssigkeitssammeleinrichtung 63 aufweist. Neben der Flüssigkeit 64, beispielsweise in Form von Wasser, kann hier auch bei anderen Prozessen entstehende Flüssigkeit gesammelt werden, beispielsweise Lüftungskondensat. Über eine Abwasserpumpe 65 und eine sechste Ventileinrichtung 66 in Form eines Rückschlagventils kann die Flüssigkeit 64 aus der Flüssigkeitssammeleinrichtung 63 einem Abwasserbehälter 67 oder dergleichen zugeführt werden.

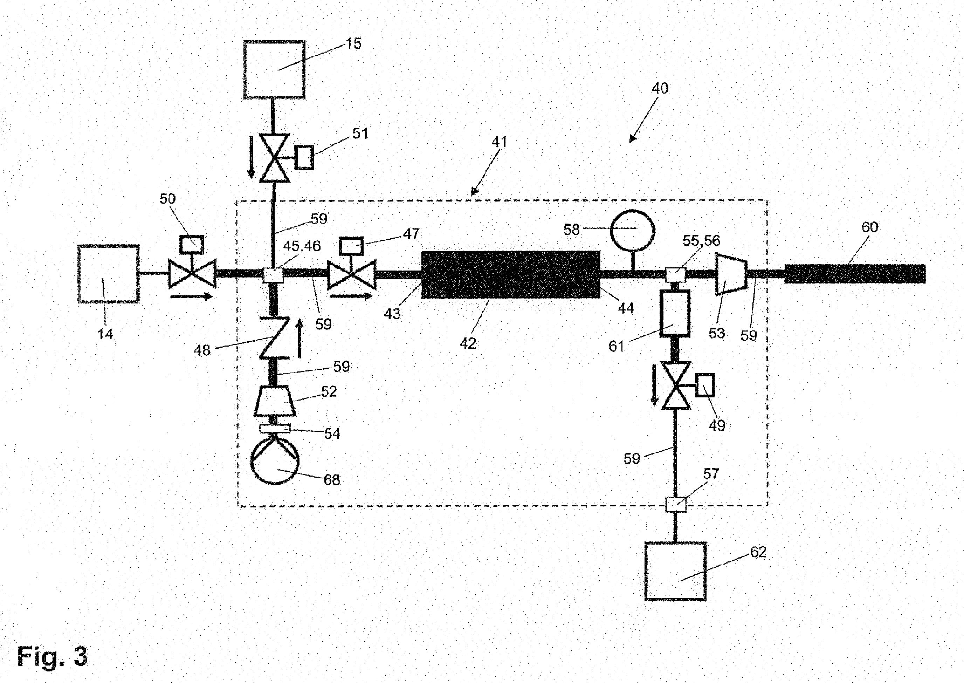

Anhand der Figuren 3 bis 8 wird nun die Funktionsweise der in Figur 2 dargestellten Spülvorrichtung 41 anhand eines entsprechenden Verfahrens beschrieben. Die in den Figuren 3 bis 8 dargestellte Spülvorrichtung 41 beziehungsweise das Spülsystem 40 entsprechen vom Aufbau her identisch dem in Figur 2 dargestellten und beschriebenen Spülsystem 40 beziehungsweise der Spülvorrichtung 41. In den Figuren 3 bis 8 wird deshalb nur auf die für den Ablauf des Verfahrens bedeutsamen Aspekte eingegangen.

Im Ausgangszustand, der in Figur 3 dargestellt ist, ist die Speicherkammer 42 drucklos mit Luft gefüllt. Diese drucklos mit Luft gefüllten Komponenten und Leitungsabschnitte der Verbindungsleitungseinrichtung 59 sind fett-schwarz markiert. Die erste Ventileinrichtung 47, die dritte Ventileinrichtung 49, die vierte Ventileinrichtung 50 und die fünfte Ventileinrichtung 51 sind geschlossen.

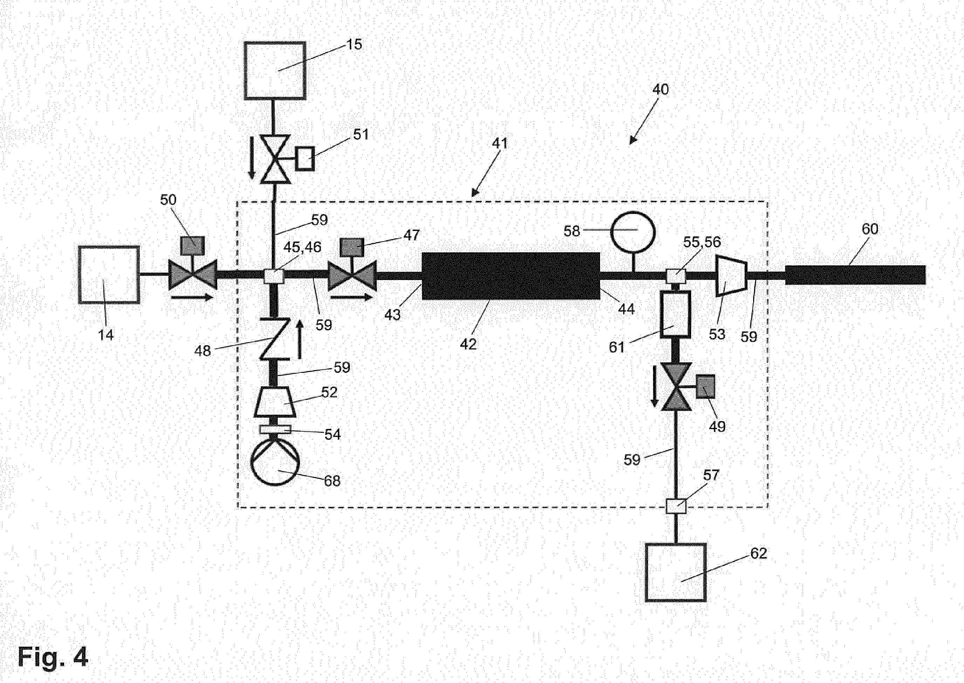

Kommt es zum Purge, das heißt zum Purge Start, der in Figur 4 dargestellt ist, werden die erste Ventileinrichtung 47 und die dritte Ventileinrichtung 49 geöffnet. Zudem wird die Ventileinrichtung der zu spülenden Komponente geöffnet, hier exemplarisch die vierte Ventileinrichtung 50 zur Elektrolyseeinrichtung 14. Die geöffneten Ventileinrichtungen sind in einem Dunkelgrau markiert. Der Purge-Start erfolgt durch einen Druckstoß. Dabei wird die vierte Ventileinrichtung 50 gegen Atmosphäre kurz geöffnet. Die entstehende Druckdifferenz über die Ventileinrichtung 50 erzeugt einen Gasvolumenstrom, der hier als das gasförmige Medium bezeichnet wird, der reaktionshemmende Stoffe aus der Elektrolyseeinrichtung 14 austrägt und in die Spülvorrichtung 41 befördert. Dieser Vorgang ist sehr schnell und dauert nur zwischen 50msec und 500msec. Dadurch wird die Luftsäule aus der Speicherkammer 42 durch die zweite Drosseleinrichtung 53 und die dritte Ventileinrichtung 49 verdrängt und verlässt die Spülvorrichtung 41. Wichtig ist hierbei, dass die engsten Strömungsquerschnitte stromab der Speicherkammer deutlich größer sind als die wasserstoffführenden Strömungsquerschnitte stromauf der Speicherkammer, damit sich während des sehr kurzen Purgevorgangs der Inhalt der Speicherkammer mit nur geringem Druckanstieg in der Speicherkammer austauscht, bevorzugt mit einem Druckanstieg von kleiner als 300 mbar.

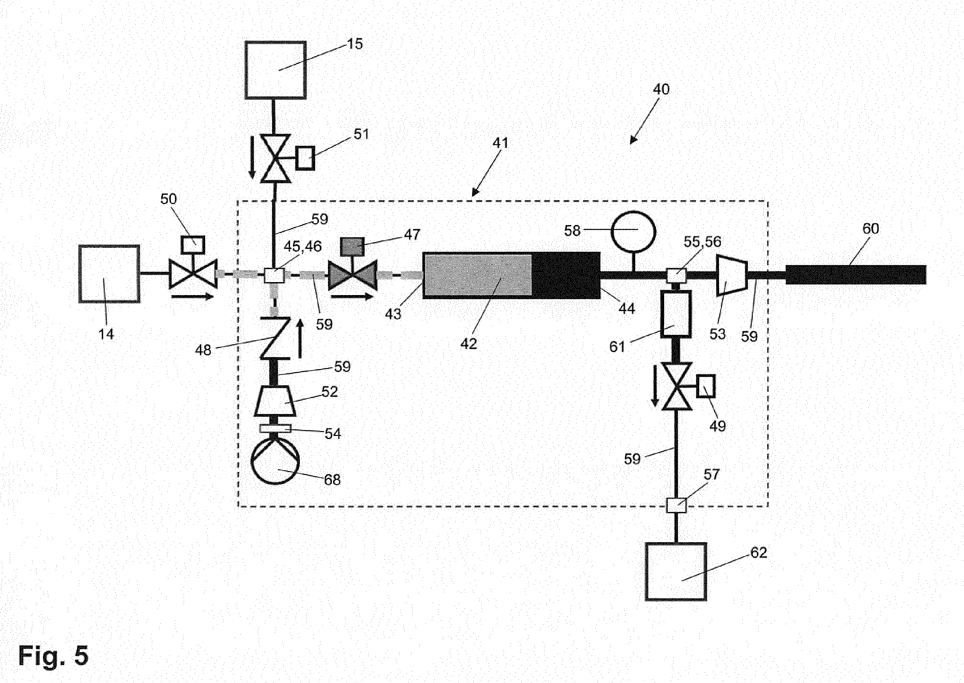

Ist der Purge beendet, wie in Figur 5 dargestellt ist, wird die dritte Ventileinrichtung 49 der Spülvorrichtung 41 geschlossen, während die erste Ventileinrichtung 47, in Dunkelgrau markiert, geöffnet bleibt. Ebenso wird die vierte Ventileinrichtung 50 zur Elektrolyseeinrichtung 14 geschlossen. Das Volumen der Speicherkammer 42 muss so gewählt werden, dass das Behältervolumen das Purgevolumen übersteigt, damit kein Wasserstoff schwallartig die Spülvorrichtung verlässt. Nun ist das Behältervolumen der Speicherkammer mit einem Purge-Luftgemisch gefüllt und liegt zwischen der vierten Ventileinrichtung 50, der zweiten Ventileinrichtung 48 in Form des Rückschlagventils vor der Pumpeneinrichtung 68 und teilweise in der Speicherkammer 42 an. Diese Bereiche sind in Mittelgrau dargestellt.

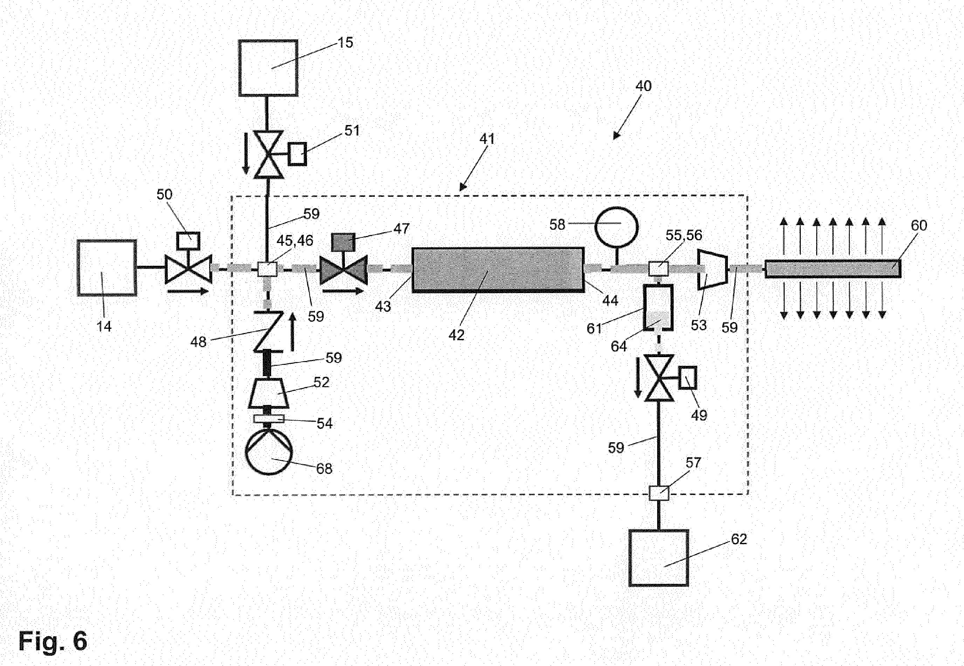

Nun beginnt, wie in Figur 6 dargestellt ist, die Pumpeneinrichtung 68 zu laufen. Alternativ läuft sie bereits während des Purges. Dabei bleibt die erste Ventileinrichtung 47, in Dunkelgrau markiert, auch weiterhin geöffnet. Die erste Drosseleinrichtung 52 in Form der ersten Blendeneinrichtung hinter der Pumpeneinrichtung 68 verhindert einen zu großen Überdruck und Flow durch die Pumpeneinrichtung 68. Durch die Pumpeneinrichtung 68 wird der Purge weiter verdünnt und durch die zweite Drosseleinrichtung 53 in Form der zweiten Blendeneinrichtung vor der Verteilungseinrichtung 60 in Richtung der Verteilungseinrichtung 60 gespült, bis in der Speicherkammer 42 ein unkritisches Gemisch aus überwiegend Luft vorliegt, welches über die Verteilungseinrichtung 60, gekennzeichnet durch entsprechende Pfeile, abgegeben wird. Diejenigen Bereiche, die ein potentiell kritisches Gemisch führen, sind in Mittelgrau dargestellt. Bereiche, die dabei unter Druck stehen, sind zudem gestrichelt dargestellt. Unter Druck stehen auch die Speicherkammer 42 sowie die Leitungsabschnitte der Verbindungsleitungseinrichtung 59 zwischen der Pumpeneinrichtung 68 und der zweiten Schnittstelle 46. Aus dem gasförmigen Medium ausgetragene Flüssigkeit 64, oder mit dem gasförmigen Medium aus der Elektrolyseeinrichtung 14 während des Purges ausgetragene Flüssigkeit wird vor der dritten Ventileinrichtung 49 in einem Reservoir 61 aufgefangen. Diese Bereiche, in denen sich ausgetragene Flüssigkeit befindet, sind in Hellgrau markiert. Der Bereich vor der dritten Ventileinrichtung 49 steht ebenfalls unter Druck und ist deshalb gestrichelt markiert.

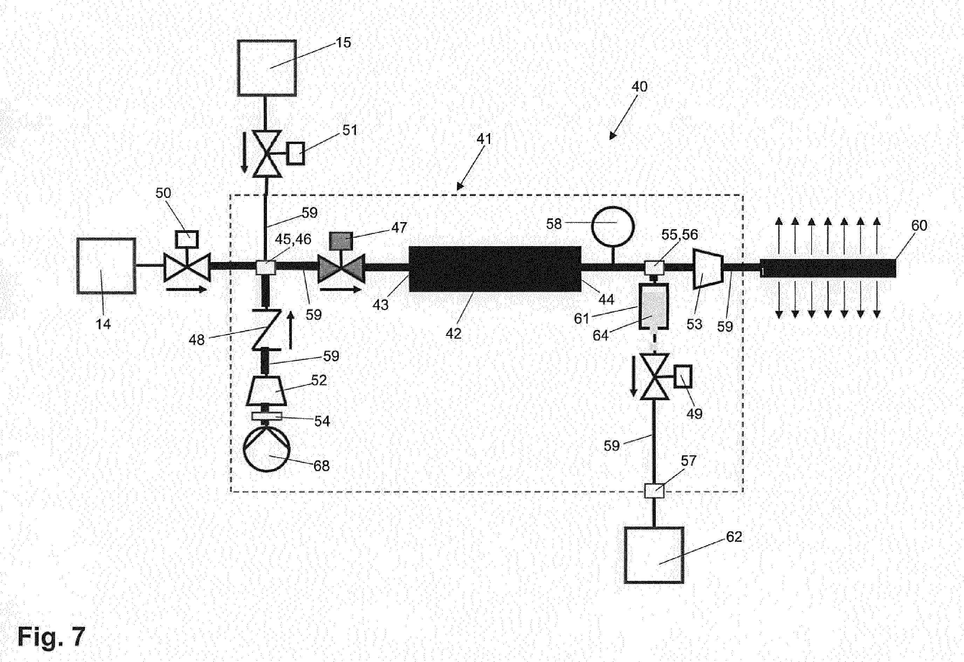

Die Pumpeneinrichtung 68 läuft, wie in Figur 7 dargestellt ist, so lange, bis das gasförmige Medium aus dem Purgevorgang vollständig aus der Speicherkammer 42 und der Spülvorrichtung 60, durch die durch die Pumpeneinrichtung 68 zugeführte Luft ausreichend verdünnt, und über die zweite Drosseleinrichtung 53 entsprechend gedrosselt, über die Verteilungseinrichtung 60 abgegeben wurde. Wichtig ist hierbei, dass in dieser Phase das Purgegas kontrolliert verlangsamt aus der Speicherkammer 42, die auch die Funktion eines Pufferbehälters übernimmt, herausgedrängt wird, mit kleinem Volumenstrom in Richtung der Verteilungseinrichtung 60 strömen kann und durch die Verteilungseinrichtung 60 hindurch an einen größeren Luftstrom abgegeben kann, der das wassertoffhaltige Purgegas zuverlässig deutlich unter die Zündgrenze verdünnt. Der Volumenstrom des Purgegases durch die Verteilungseinrichtung 60 beträgt in etwa der Fördermenge der Pumpeneinrichtung 68. Schließlich befindet sich dann nur noch Luft in der Spülvorrichtung 41, was fett-schwarz markiert ist. Bereiche, die dabei unter Druck stehen, sind zudem gestrichelt dargestellt. Unter Druck steht auch die Speicherkammer 42 sowie die Leitungsabschnitte der Verbindungsleitungseinrichtung 59 zwischen der Pumpeneinrichtung 68 und der zweiten Schnittstelle 46. Die gesamte aus dem gasförmigen Medium ausgetragene Flüssigkeit 64, oder mit dem gasförmigen Medium aus der Elektrolyseeinrichtung 14 ausgetragene Flüssigkeit ist nun vor der dritten Ventileinrichtung 49 in dem Reservoir 61 aufgefangen. Diese Bereiche, in denen sich ausgetragene Flüssigkeit befindet, sind in Hellgrau markiert. Der Bereich vor der dritten Ventileinrichtung 49 steht ebenfalls unter Druck und ist deshalb gestrichelt markiert. Die erste Ventileinrichtung 47, Dunkelgrau markiert, ist dabei immer noch offen.

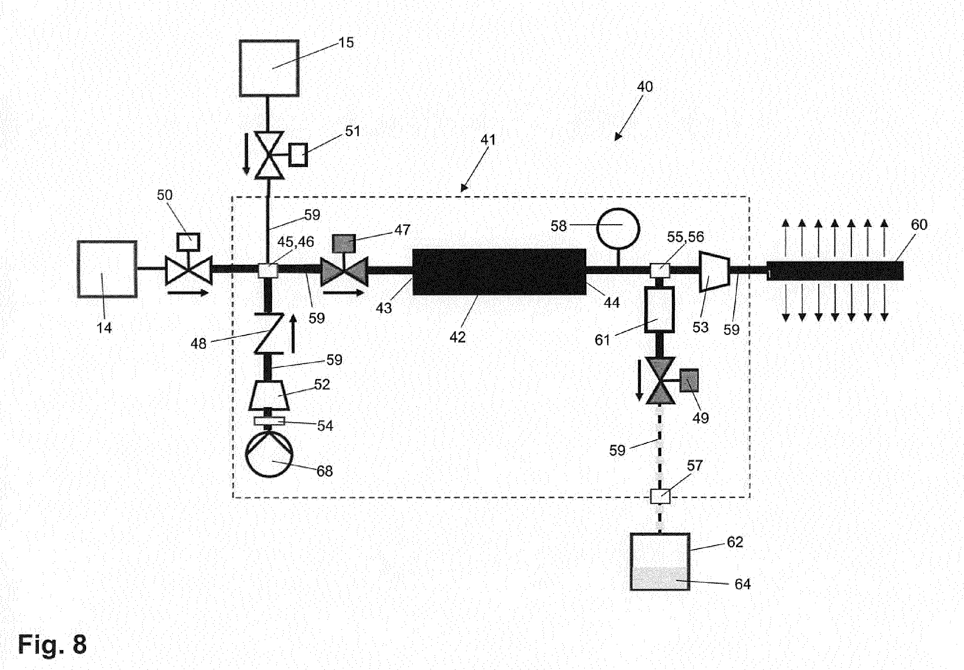

Zum Ende des Verfahrens wird, wie in Figur 8 dargestellt ist, die Pumpeneinrichtung 68 wieder abgestellt. Die dritte Ventileinrichtung 49 wird, Dunkelgrau markiert, geöffnet, so dass die Flüssigkeit 64 aus dem Reservoir 61 über die fünfte Schnittstelle 57 in die Einrichtung 62 zum Austragen von Flüssigkeit ablaufen kann. Diese Bereiche, in denen sich ausgetragene Flüssigkeit befindet, sind in Hellgrau markiert.

Dann wird auch die erste Ventileinrichtung 47 wieder geschlossen. Die Flüssigkeit, die der Purge mit sich trägt, wurde während des Purges zunächst vor die dritte Ventileinrichtung 49 der Spülvorrichtung 40 transportiert und sammelte sich dort an. Durch das Öffnen der dritten Ventileinrichtung 49 vor dem nächsten Purge oder sofort, um die Spülvorrichtung 41 drucklos zu machen, wird das Wasser aus der Spülvorrichtung 41 befördert. Spätestens der nächste Purge befördert auch die letzten Reste Flüssigkeit aus der Spülvorrichtung 41. Nachdem der in Figur 3 dargestellte Ausgangszustand wieder hergestellt wurde, kann das Verfahren von Neuem beginnen.

### Bezugszeichenliste

- 10: Energiesystem (Gebäudeenergiesystem)
- 11: Erstes Untersystem (Innensystem)
- 12: Systemschrank
- 13: Zweites Untersystem (Außensystem)
- 14: Elektrolyseeinrichtung
- 15: Brennstoffzelleneinrichtung
- 16: Verbindungsleitungseinrichtung
- 17: Rückschlagventileinrichtung
- 18: Filtereinrichtung
- 19: Trocknereinrichtung
- 20: Druckmesseinrichtung
- 21: Hochdruckspeichereinrichtung
- 22: Mitteldruckspeichereinrichtung
- 23: Ventileinrichtung
- 24: Kompressoreinrichtung
- 25: Rückschlagventileinrichtung
- 26: Entspannungseinrichtung (Druckminderer)
- 27: Erster Leitungsabschnitt
- 28: Zweiter Leitungsabschnitt
- 29: Systemluftstrom

- 40: Spülsystem
- 41: Spülvorrichtung
- 42: Speicherkammer
- 43: Eingangsseite
- 44: Ausgangsseite
- 45: Erste Schnittstelle
- 46: Zweite Schnittstelle
- 47: Erste Ventileinrichtung
- 48: Zweite Ventileinrichtung
- 49: Dritte Ventileinrichtung
- 50: Vierte Ventileinrichtung
- 51: Fünfte Ventileinrichtung
- 52: Erste Drosseleinrichtung (erste Blendeneinrichtung)
- 53: Zweite Drosseleinrichtung (zweite Blendeneinrichtung)
- 54: Element zur Funktionsdiagnose der Pumpeneinrichtung (Druckschalter)
- 55: Dritte Schnittstelle
- 56: Vierte Schnittstelle
- 57: Fünfte Schnittstelle
- 58: Drucksensorelement
- 59: Verbindungsleitungseinrichtung
- 60: Verteilungseinrichtung
- 61: Flüssigkeitsreservoir
- 62: Einrichtung zum Austragen von Flüssigkeit
- 63: Flüssigkeitssammeleinrichtung
- 64: Flüssigkeit
- 65: Abwasserpumpe
- 66: Sechste Ventileinrichtung
- 67: Abwasserbehälter
- 68: Pumpeneinrichtung
- 69: Einbauelement

## Patentansprüche

1. Spülvorrichtung (41) zum Aufnehmen und/oder Zwischenspeichern und/oder kontrollierten Abgeben von einem gasförmigen Medium, insbesondere von während eines Purgevorgangs ausgetragenem Purgegas, aufweisend
eine volumenkonstante Speicherkammer (42) für das gasförmige Medium, die eine Eingangsseite (43) und eine Ausgangsseite (44) aufweist,
eine erste Schnittstelle (45) zu wenigstens einer zu spülenden Komponente, insbesondere zu einer Elektrolyseeinrichtung (14) und/oder zu einer Brennstoffzelleneinrichtung (15), die vor der Eingangsseite (43) der Speicherkammer (42) bereitgestellt ist,
eine zweite Schnittstelle (46) zu einer Pumpeneinrichtung (68), die vor der Eingangsseite (43) der Speicherkammer (42) bereitgestellt ist, und
eine Pumpeneinrichtung (68), insbesondere eine Luftpumpeneinrichtung, die derart bereitgestellt ist, dass sie in der Lage ist, ein Prozessgas, insbesondere Luft, in die Speicherkammer (42) bereitzustellen.

2. Spülvorrichtung nach Anspruch 1, **dadurch gekennzeichnet, dass** in der Speicherkammer (42) wenigstens ein Einbauelement (69) angeordnet oder ausgebildet ist, welches derart bereitgestellt ist, dass es in der Lage ist, die Strömung innerhalb der Speicherkammer (42) zu beeinflussen.

3. Spülvorrichtung nach Anspruch 1 oder 2, weiterhin aufweisend eine dritte Schnittstelle (55) zu wenigstens einer gasförmiges Medium aus der Spülvorrichtung (41) abgebenden Komponente, insbesondere zu einer Verteilungseinrichtung (60) für das gasförmige Medium, die hinter der Ausgangsseite (44) der Speicherkammer (43) bereitgestellt ist.

4. Spülvorrichtung nach einem der Ansprüche 1 bis 3, weiterhin aufweisend eine vierte Schnittstelle (56) zu einem Reservoir (61) zum Aufnehmen von aus dem gasförmigen Medium abgeschiedener Flüssigkeit, die hinter der Ausgangsseite (44) der Speicherkammer (42) bereitgestellt ist, und optional aufweisend ein Reservoir (61) zum Aufnehmen von aus dem gasförmigen Medium abgeschiedener Flüssigkeit.

5. Spülvorrichtung nach einem der Ansprüche 1 bis 4, **dadurch gekennzeichnet, dass** die Spülvorrichtung (41) eine fünfte Schnittstelle (57) zu einer Einrichtung (62) zum Austragen von Flüssigkeit aus der Spülvorrichtung (41) aufweist.

6. Spülvorrichtung nach einem der Ansprüche 1 bis 5, **dadurch gekennzeichnet, dass** die Spülvorrichtung (41) eine oder mehrere den Durchfluss verändernde Komponenten aufweist, die ausgewählt ist/sind aus der Gruppe, bestehend aus einer ersten Ventileinrichtung (47) zwischen der ersten Schnittstelle (45) und der Eingangsseite (43) der Speicherkammer (42), einer ersten Drosseleinrichtung (52), insbesondere einer ersten Blendeneinrichtung zwischen der Pumpeneinrichtung (68) und der zweiten Schnittstelle (46), einer zweiten Ventileinrichtung (48) zwischen der Pumpeneinrichtung (68) und der zweiten Schnittstelle (46), einer zweiten Drosseleinrichtung (53), insbesondere einer zweiten Blendeneinrichtung vor oder hinter der dritten Schnittstelle (55), einer dritten Ventileinrichtung (49) vor der fünften Schnittstelle (57).

7. Spülvorrichtung nach einem der Ansprüche 1 bis 6, **dadurch gekennzeichnet, dass** die Spülvorrichtung (41) eines oder mehrere Sensorelemente aufweist, das/die ausgewählt ist aus der Gruppe bestehend aus einem Drucksensorelement in der Speicherkammer (42), aus einem Drucksensorelement vor der Eingangsseite (43) der Speicherkammer (42), einem Drucksensorelement (58) hinter der Ausgangseite (44) der Speicherkammer (42), einem Gas-Gehalts-Messelement in der Speicherkammer (42), einem Gas-Gehalts-Messelement hinter der Ausgangsseite (44) der Speicherkammer (42), einem Element (54) zur Funktionsdiagnose der Pumpeneinrichtung (68).

8. Spülvorrichtung nach Anspruch 6 oder 7, **dadurch gekennzeichnet, dass** eine oder mehrere der den Durchfluss verändernden Komponenten und/oder eines oder mehrere der Sensorelemente in einem Block zusammengefasst sind.

9. Spülsystem (40) zum Aufnehmen und/oder Zwischenspeichern und/oder kontrollierten Abgeben von einem gasförmigen Medium, insbesondere von während eines Purgevorgangs ausgetragenem Purgegas, aufweisend eine Spülvorrichtung (41) nach einem der Ansprüche 1 bis 8.

10. Spülsystem nach Anspruch 9, **dadurch gekennzeichnet, dass** das Spülsystem (40) eine vierte Ventileinrichtung (50) aufweist, die zur Verbindung mit einer Elektrolyseeinrichtung (14) bereitgestellt ist, und/oder dass das Spülsystem (40) eine fünfte Ventileinrichtung (51) aufweist, die zur Verbindung mit einer Brennstoffzelleneinrichtung (15) bereitgestellt ist.

11. Spülsystem nach Anspruch 9 oder 10, **dadurch gekennzeichnet, dass** die Ausgangsseite (44) der Speicherkammer (42) der Spülvorrichtung (41) über die dritte Schnittstelle (55) mit einer Verteilungseinrichtung (60) für das aus der Speicherkammer (42) abgegebene gasförmige Medium verbunden ist, und/oder dass die Ausgangsseite (44) der Speicherkammer (42) der Spülvorrichtung (41) über die vierte Schnittstelle (56) mit einem Reservoir (61) zum Aufnehmen von aus dem gasförmigen Medium abgeschiedener Flüssigkeit verbunden ist, und/oder dass die Spülvorrichtung (41) über die fünfte Schnittstelle (57) mit einer Einrichtung (62) zum Austragen von Flüssigkeit aus der Spülvorrichtung (41) verbunden ist.

12. Energiesystem (10), insbesondere Gebäudeenergiesystem, aufweisend eine Elektrolyseeinrichtung (14), eine Brennstoffzelleneinrichtung (15), optional eine Hochdruckspeichereinrichtung (21), sowie eine Verbindungsleitungseinrichtung (16), über die die Elektrolyseeinrichtung (14), die Brennstoffzelleneinrichtung (15) sowie optional die Hochdruckspeichereinrichtung (21) miteinander verbunden sind, **dadurch gekennzeichnet, dass** das Energiesystem (10) eine Spülvorrichtung (41) nach einem der Ansprüche 1 bis 8 zum Aufnehmen und/oder Zwischenspeichern und/oder kontrollierten Abgeben von einem gasförmigen Medium, insbesondere von während eines Purgevorgangs ausgetragenem Purgegas, oder ein Spülsystem (40) nach einem der Ansprüche 9 bis 11 zum Aufnehmen und/oder Zwischenspeichern und/oder kontrollierten Abgeben von einem gasförmigen Medium, insbesondere von während eines Purgevorgangs ausgetragenem Purgegas, aufweist.

13. Verfahren zum Aufnehmen und/oder Zwischenspeichern und/oder kontrollierten Abgeben von einem Medium, insbesondere von während eines Purgevorgangs ausgetragenem Purgegas, unter Verwendung einer Spülvorrichtung (41), welche aufweist eine volumenkonstante Speicherkammer (42) für das gasförmige Medium, die eine Eingangsseite (43) und eine Ausgangsseite (44) aufweist, eine erste Schnittstelle (45) zu wenigstens einer zu spülenden Komponente, insbesondere zu einer Elektrolyseeinrichtung (14) und/oder zu einer Brennstoffzelleneinrichtung (15), die vor der Eingangsseite (43) der Speicherkammer (42) bereitgestellt ist, eine zweite Schnittstelle (46) zu einer Pumpeneinrichtung (68), die vor der Eingangsseite (43) der Speicherkammer (42) bereitgestellt ist, und eine Pumpeneinrichtung (68), insbesondere eine Luftpumpeneinrichtung, die derart bereitgestellt ist, dass sie in der Lage ist, ein Prozessgas, insbesondere Luft, in die Speicherkammer (42) bereitzustellen, wobei das Verfahren durch folgende Schritte gekennzeichnet ist:
a) im Ausgangszustand des Verfahrens ist die Speicherkammer (42), vorzugsweise drucklos, mit Prozessgas, insbesondere mit Luft, gefüllt;
b) bei Spülbeginn wird gasförmiges Medium aus einer zu spülenden Komponente über die erste Schnittstelle (45) an der Eingangsseite (43) in die Speicherkammer (42) eingebracht und die in der Speicherkammer (42) befindliche Prozessgassäule wird über die Ausgangsseite (44) der Speicherkammer (42) ausgetragen;
c) nach Beendigung des Einbringens, optional auch während des Einbringens des gasförmigen Mediums in die Speicherkammer (42) wird die Pumpeneinrichtung (68) aktiviert und Prozessgas in die Speicherkammer (42) gepumpt, wodurch das gasförmige Medium in der Speicherkammer (42) verdünnt wird und das verdünnte Medium über die Ausgangsseite (44) aus der Speicherkammer (42) hinausgedrückt wird;
d) das verdünnte gasförmige Medium wird aus der Spülvorrichtung (41) ausgetragen;
e) anschließend wird die Spülvorrichtung (41) in den Ausgangszustand versetzt und die Speicherkammer (42), vorzugsweise drucklos, mit Prozessgas, insbesondere mit Luft, gefüllt.

14. Verfahren nach Anspruch 13, **dadurch gekennzeichnet, dass** das verdünnte gasförmige Medium über eine dritte Schnittstelle (55) der Spülvorrichtung (41), die hinter der Ausgangsseite (44) der Speicherkammer (42) bereitgestellt ist, zu wenigstens einer gasförmiges Medium aus der Speicherkammer (42) abgebenden Komponente, insbesondere zu einer Verteilungseinrichtung (60) für das gasförmige Medium, ausgetragen wird.

15. Verfahren nach Anspruch 13 oder 14, **dadurch gekennzeichnet, dass** aus dem gasförmigen Medium abgeschiedene Flüssigkeit über eine vierte Schnittstelle (56) der Spülvorrichtung (41), die hinter der Ausgangsseite (44) der Speicherkammer (42) bereitgestellt ist, in ein Reservoir (61) zum Aufnehmen von Flüssigkeit ausgetragen wird.
